# NEUE EUROPÄISCHE PATENTSCHRIFT

(11) **EP 2 297 005 B2**
(45) Veröffentlichungstag und Bekanntmachung des Hinweises auf die Entscheidung über den Einspruch: **16.12.2020**
(45) Hinweis auf die Patenterteilung: 13.02.2013
(21) Anmeldenummer: 09753312.9
(22) Anmeldetag: 26.05.2009
(51) Int. Cl.: B65G 1/137

(54) **LAGERSYSTEM UND VERFAHREN ZUM BETREIBEN DESSELBEN**
WAREHOUSE SYSTEM AND METHOD FOR OPERATING THE SAME
SYSTÈME DE STOCKAGE ET PROCÉDÉ POUR LE FAIRE FONCTIONNER

(30) Priorität: 26.05.2008 AT 8412008
(43) Veröffentlichungstag der Anmeldung: 23.03.2011
(73) Patentinhaber: TGW Logistics Group GmbH, 4614 Marchtrenk (AT)
(72) Erfinder: MIRANDA, Febres Patricio, A-4600 Wels (AT); LINDLEY, Timothy, A-4600 Wels (AT)
(74) Vertreter: Burger, Hannes
(86) Internationale Anmeldenummer: PCT/AT2009/000220
(87) Internationale Veröffentlichungsnummer: WO 2009/143548

(56) Entgegenhaltungen:
- EP-A- 1 698 573
- DE-U1- 20 320 338
- DE-U1-202007 009 399
- US-A- 5 733 098
- US-A1- 2002 117 429
- US-A1- 2007 005 180

## Beschreibung

Die Erfindung betrifft ein Verfahren zum Betreiben eines Lagersystems und das Lagersystem, wie in den Oberbegriffen der Ansprüche 1 und 20 beschrieben.

Aus der US 2002/0117429 A1 ist ein gattungsgemäßes Verfahren zum Sortieren von unterschiedlichen Packeinheiten in einem Lagersystem bekannt, bei dem die Packeinheiten auf Ladehilfsmittel durch das Lagersystem gefördert und an zumindest einer Sortierstation sortiert und in einer sortierten Reihenfolge auf ein Ausliefergebinde geladen werden. Die Sortierung wird nach definierten Sortierkriterien durchgeführt, welche durch einen Kunden(auftrag) und Packeinheiten-Eigenschaften, wie Gewicht, Form, Zerbrechlichkeit oder Stabilität der Packeinheit, und beispielsweise eine Lagertemperatur, die Type des Ladehilfsmittels, einen Routenplan, die Auslieferreihenfolge und dgl. definiert werden. Die Packeinheiten werden gemäß diesen Sortierkriterien entsprechend klassifiziert und nach deren Identifikation einer Klassifizierung zugeordnet werden.

Ein Lagersystem ist auch aus der DE 203 20 338 U1 bekannt, bei dem an einer Anlieferungsstation Vorratseinheiten empfangen und in einem Eingangslager eingelagert werden. Das Eingangslager ist über eine automatisierte Fördertechnik mit einem Zwischenlager verbunden, welches als Puffer dient, sodass immer dann, wenn Packeinheiten im Zwischenlager knapp werden, Packeinheiten aus dem Eingangslager angefordert werden. Dazu werden Vorratseinheiten über Regalbediengeräte aus dem Eingangslager ausgelagert und Depalettiereinrichtungen zugeführt, welche von den Vorratseinheiten nacheinander eine oder mehrere Palettenlagen entnimmt und an die Fördertechnik übergibt Ein Lagerarbeiter kann entsprechend einem Kommissionierauftrag Packeinheiten von Gefällebahnen im Zwischenlager entnehmen und manuell auf ein Ausliefergebinde stapeln. Der Zugriff des Lagerarbeiters auf die Gefällebahnen wird durch einen Verwaltungsrechner hinsichtlich einer optimalen Wegstrecke, Stückzahl, Gewicht, Verpackung koordiniert.

Ein Verfahren zum Betreiben eines Lagersystems ist auch aus der US 2007/005180 A1 bekannt, bei dem Behälter mit unterschiedlichen Aufnahmevolumen von einem Eingangslager zu Depalettiereinrichtungen gefördert, von diesen vereinzelt und über eine Versorgungsfördereinrichtung in Zwischenlagern eingelagert werden. Aus den Zwischenlagern werden die für einen Kommissionierauftrag erforderlichen Behälter ausgelagert und über eine Fördertechnik zu unterschiedlichen Beladestationen gefördert.

Die DE 20 2007 009 399 U1 offenbart ein kombiniertes Warenlager, welches einen Einzelplatzlagerautomat und einen Kanallagerautomat umfasst. Der Einzelplatzlagerautomat und der Kanallagerautomat arbeiten mit einem gemeinsamen Warenannahmeautomaten zusammen. Die Packeinheiten durchlaufen einzeln eine Vermessungsstation, sodass jede einzelne Packeinheit identifiziert wird. Nach Identifikation einer Packeinheit, wird diese entweder dem Einzelplatzlagerautomaten oder Kanallagerautomaten zugeführt.

Aus der EP 1 698 573 A1 ist ein Lagersystem und Verfahren zum Betreiben desselben bekannt, bei dem die Packeinheiten an Anlieferungsstationen auf Anliefergebinden übernommen, in ein Eingangslager (Palettenlager) durch ein Regalförderfahrzeug zwischengelagert und von Anliefergebinden entsprechend einem Nachschubauftrag depalettiert, vereinzelt und auf Tablare einzeln umgeladen werden. Eine Packeinheit ist eine kleinste Einheit einer Warensendung. Ein Paket aus mehreren mit einer Folie miteinander verschweißten Artikeln stellt eine Packeinheit dar. Die Tablare werden zu einem Zwischenlager (Tablarlager) gefördert und in diesem gelagert. Wird ein Kundenauftrag vom Lagerverwaltungsrechner erfasst, werden die benötigten Packeinheiten auf den Tablaren ausgelagert, in eine durch eine Beladungskonfiguration im Ladestapel definierte Beladereihenfolge sortiert und zu einer automatischen Stapeleinrichtung zugeführt. Dort angekommen, wird die Packeinheit vom Tablar abgehoben und auf eine ortsfeste Ladeplatte übergeben und danach auf einem Ausliefergebinde gemäß der Beladungskonfiguration gestapelt. Jede Packeinheit wird auf einem eigenen Tablar abgelegt und im Tablarlager gepuffert. Das Tablarlager verfolgt für jedes Tablar einen eigenen Stellplatz. Das Lagersystem soll in der Lage sein, mehrere tausende Packeinheiten pro Tag zu kommissionieren. Bedingt durch die hohe Anzahl an zu kommissionierenden Packeinheiten ist eine große Anzahl an Stellplätzen erforderlich. Die Vielzahl von Stellplätzen verteilt sich über eine Vielzahl von Lagerregalen im Tablarlager. Damit verbunden sind ein großer Raumbedarf zum Aufstellen der Lagerregale und hohe Anschaffungskosten. Ein größeres Tablarlager verlangt nach einer zunehmenden Anzahl an Förderfahrzeugen und dadurch steigen auch die Energiekosten an.

Die US 5,733,098 A beschreibt ein Verfahren zum Betreiben eines Lagersystems, bei dem die Packeinheiten mittels Handhabungseinrichtungen von Ladestapeln auf Anliefergebinden entnommen und der Förderbahnen entsprechend einem Kundenauftrag zu einer automatischen Stapeleinrichtung zugeführt und von dieser nach einer optimierten Beladungskonfiguration auf ein Ausliefergebinde gestapelt werden. Die Packeinheiten werden ohne zusätzliches Ladehilfsmittel, wie Tablar, ungeachtet ihrer Eigenschaften, wie Dimensionen, Beschaffenheit und dgl., gefördert. Dies hat zur Folge, dass ein nur sehr eingeschränktes Packeinheiten-Sortiment manipuliert werden kann und im gesamten Lagersystem geeignete Förderbahnen verwendet werden müssen, die mit höheren Anschaffungskosten verbunden sind als standardisierte Förderbahnen.

Der vorliegenden Erfindung liegt die Aufgabe zugrunde, ein Verfahren zum Betreiben eines Lagersystems zu schaffen, das sich durch seine Wirtschaftlichkeit und auch bei dem üblicherweise sehr breiten Sortiment an Artikel (Packeinheiten) durch eine hohe Verfügbarkeit auszeichnen.

Die Aufgabe der Erfindung wird durch die Maßnahmen und Merkmale der Ansprüche 1 und 20 gelöst. Mit dem erfindungsgemäßen Verfahren und Lagersystem sind mehrere tausende, unterschiedliche Packeinheiten pro Tag zu kommissionieren. Die Packeinheiten sind von unterschiedlicher Beschaffenheit, beispielsweise sind sie sehr empfindlich gegen Erschütterungen oder Druckbelastungen (bruchgefährdet), haben kleinste Abmessungen, unterschiedliche Formstabilitäten (biegeschlaff oder formstabil), weisen die äußere Verpackungen unterschiedliche Oberflächenbeschaffenheiten auf oder dürfen nur in einer bestimmten Lage manipuliert werden etc. Das breite Sortiment an Packeinheiten, die hohe Anzahl an Kundenaufträge und die unterschiedliche Beschaffenheit der Packeinheiten verlangen einerseits nach einer extrem hohen Durchsatzleistung der Packeinheiten und andererseits nach einer zuverlässigen Verteilung (Beförderung) und Lagerung im Lagersystem ohne Störungen. Vor diesem Hintergrund sieht die Erfindung die Erfassung der Fördereigenschaften und Zuordnung jedes Packeinheitentyps zu einer Klassifikationsgruppe vor. Es werden von den Packeinheitentypen jene Eigenschaften erfasst, die wesentliche Auswirkungen auf deren Förder- und Lagerungsmethode zeigen. Die Packeinheiten können danach anhand der Klassifikationsgruppe koordiniert vollautomatisiert oder teilautomatisiert im Lagersystem verteilt und gelagert werden. Dies führt zu einer insgesamt sehr zuverlässigen und wirtschaftlichen Betriebsweise des Lagersystems. In die erste Klassifikationsgruppe fallen jene Packeinheiten, die im Lagersystem zwischen einer Aufgabe- und Abgabestation vollautomatisiert verteilt und gelagert werden können, und in die zweite Klassifikationsgruppe fallen jene Packeinheiten, die im Lagersystem zwischen einer Aufgabe- und Abgabestation teilautomatisiert verteilt und gelagert werden können. Die Packeinheiten der ersten Klassifikationsgruppe können ohne zusätzliches Ladehilfsmiltel, wie Tablar und dgl., im Lagersystem sowohl verteilt als auch gelagert werden, während die Packeinheiten der zweiten Klassifikationsgruppe von Vorratseinheiten in Ladungsträger manuell umgeladen und mittels dieser verteilt und gelagert werden. Das Auftragsvolumen der Packeinheiten zweiter Klassifikationsgruppe (kleiner 20 %) entspricht im Vergleich zu den Packeinheiten erster Klassifikationsgruppe (größer 80 %) nur einem geringen Anteil. Zwar werden für die Packeinheiten der zweiten Klassifikationsgruppe, wenn auch bei geringem Auftragsvolumen, Ladungsträger verwendet, sind diese jedoch in der Regel mit einer Vielzahl von Packeinheiten beladen. Damit wird bei der Lagerung der Packeinheiten gegenüber solchen aus dem Stand der Technik bekannten Lagerungsprinzipien mit Ladehilfsmittel für jede Packeinheit, eine hocheffiziente Raumausnutzung bzw. höhere Lagerdichte (Verhältnis zwischen Volumen der Packeinheiten und Lagervolumen) und ein besonders wirtschaftliches Lagersystem mit hoher Verfügbarkeit erreicht.

Von Vorteil ist auch die Maßnahme nach Anspruch 2, da die Packeinheiten der ersten Beladestation in einer für die Stapelung auf dem Ausliefergebinde optimierten Beladungsreihenfolge zugefördert werden. Die Beladungsreihenfolge ergibt sich aus einer von einem Rechner, insbesondere einem Computerprogramm, bezüglich Stabilität, Volumenausnutzung und Höhe des Ladestapels etc. berechneten, optimierten Beladungskonfiguration.

Gemäß der Maßnahme nach Anspruch 3 werden die Packeinheiten nur zu jenem Lagerregal gefördert, welches freie Stellplätze enthält und mit Packeinheiten beschickt werden kann, und zu welchem eine Einlagerbahn des Packeinheiten-Verteilsystems führt, die ohne Verzögerung die Packeinheiten übernehmen und den Transport der Packeinheiten zum Lagerregal vornehmen kann.

Mit der Maßnahme nach Anspruch 4 wird eine Leistungssteigerung des Packeinheiten-Verteilsystems, insbesondere eines die Lagerpositionen bzw. Lagerregale bedienenden Regalförderfahrzeuges erreicht, da eine Umlagerung von Packeinheiten über das Regalförderfahrzeug innerhalb der Lagerregale entfallen kann, um die Kommissionierung von Packeinheiten in auftragsbezogene Lagerkanäle zu ermöglichen. Die Packeinheiten werden bereits in der für ihre Einlagerung in die auftragsbezogenen Lagerkanäle erforderlichen Reihenfolge von der Lastaufnahmevorrichtung des Regalförderfahrzeuges übernommen. Die Reihenfolgebildung wird noch auf einer Einlagerbahn entkoppelt vom Regalförderfahrzeug durchgeführt.

Werden die Packeinheiten sortiert in auftragsbezogene Lagerkanäle eingelagert, gemäß Anspruch 5, kann das als Auftragspuffer dienende Zwischenlager auf das durchschnittliche Auftragsvolumen ausgelegt werden. Das Zwischenlager ist vorzugsweise durch ein Fachbodenregallager gebildet und die Packeinheiten werden auf die Fachböden ohne zusätzliches Ladehilfsmittel, wie Tablar und dgl., an den Lagerpositionen abgestellt. Nach der EP 1 698 573 A1 wird auf einem Tablar nur eine einzige Packeinheit geladen, grundsätzlich unabhängig von den Abmessungen einer jeden einzelnen Packeinheit. Dadurch können innerhalb eines Lagerkanals nur wenige Packeinheiten gelagert werden und wird nur ein niedriger Füllgrad im Tablarlager erreicht. Dem gegenüber ist nach einer Ausführung der gegenständlichen Erfindung die Anzahl der Lagerpositionen alleinig durch die Abmessung der zu einem Kommissionierauftrag benötigten Packeinheiten bestimmt und nicht durch die räumlichen Abmessungen eines Tablares.

Von Vorteil ist auch die Maßnahme nach Anspruch 6, da die zuvor in Lagerkanäle zu einem Kommissionierauftrag zusammengestellten Packeinheiten als Packeinheitengruppe(n) aus dem Zwischenlager ausgelagert und diese entweder bei ihrer Auslagerung oder in einem anschließenden Sortierschritt, beispielsweise in einer Sortierfördereinrichtung, in eine definierte Reihenfolge sortiert werden. Durch die Auslagerung einer Packeinheitengruppe kann eine Leistungssteigerung des Packeinheiten-Verteilsystems und die Durchsatzleistung an versandfertigen Liefereinheiten erhöht werden.

Mit der Maßnahme nach Anspruch 7 wird die grundlegende Vorraussetzung für eine optimale Beladungsreihenfolge definiert, mit der die Ladestapel besonders stabil und einfach transportfähig sind und das Ladevolumen am Ausliefer-Transportwagen gut ausgenützt werden kann. Darüber hinaus wird eine Reduzierung der Kosten bei gleichzeitiger Steigerung der Verladeleistungen erreicht.

Mit der Maßnahme nach Anspruch 8 wird eine Feinsortierung der Packeinheiten innerhalb der Packeinheitengruppe(n) durchgeführt und ein weiterer Optimierungsschritt zur Stapelbildung erreicht.

Gemäß der Maßnahme nach Anspruch 9 werden jene nicht zu einem Kommissionierauftrag benötigten Packeinheiten, beispielsweise wenn die Packeinheiten von den Vorratseinheiten lagenweise depalettiert und vereinzelt werden, vom Rechner erfasst und freie Lagerkanäle im Zwischenlager ermittelt, in welche die Packeinheiten zwischengelagert werden. Diese Lagerkanäle werden als so genannte Überlaufkanäle definiert und mit den Packeinheiten vorzugsweise vollständig aufgefüllt. Wird vom Rechner ein Kommissionierauftrag erfasst, kann in einem Vergleich festgestellt werden, ob die zu diesem Kommissionierauftrag benötigten Packeinheiten in einem der Überlaufkanäle enthalten sind. Ist dies der Fall, wird der oder die Überlaufkanäle als Auftragskanäle definiert. Dadurch kann das durch die Lagerregale zu Verfügung stehende Lagervolumen optimal ausgenutzt und ein hoher Füllgrad erreicht werden.

Die Maßnahmen und Weiterbildung nach den Ansprüchen 10, 11 und 22 sind von Vorteil, da in einem Kommissionierschritt weitere Packeinheiten beispielsweise mit niedriger Umschlaghäufigkeit (C-Artikel) in einen Versandträger auf besonders effiziente Weise kommissioniert werden.

Gemäß Anspruch 12 werden die Versandträger in einem Auftragspuffer je Kundenauftrag bereitgestellt und erst nach der Beladung eines Ausliefergebindes in einen Konsolidierungsbereich transportiert. Die Konsolidierungsperson muss sich nicht mehr auf die Kommissionierung konxentrieren, sondern hat ausschließlich dafür Sorge zu tragen, dass die fertigen Liefereinheiten gemäß einer Auslieferreihenfolge zusammengestellt werden. Dadurch wird auch im Konsolidierungsbereich eine hohe Durchsatzleistung an Liefereinheiten erreicht, selbst wenn die Liefereinheiten durch eine Konsolidierungsperson in die Auslieferreihenfolge zusammengestellt werden.

Vorteilhafte Maßnahmen sind auch in den Ansprüchen 13 und 14 beschrieben, da das zweite Zwischenlager als Nachschublager mit einer kurzen "Reichweite" von 1,5 bis 7 Tage dient und darin der Kommissionier- und Auslieferbestand für die erfassten Kundenaufträge und ein Pufferbestand vorrätig ist. Nur wenn im Zwischenlager ein Mindestbestand an Versand- und Versorgungsträgern erreicht wird, wird vom Rechner ein Nachschubauftrag generiert, Packeinheiten in Ladungsträger umgeladen sowie in das Zwischenlager "nachgeschoben".

Gemäß Anspruch 15 wird zusätzlich eine dritte Klassifikationsgruppe definiert. Das Auftragsvolumen der Packeinheiten dritter Klassifikationsgruppe entspricht etwa 5 % oder weniger. In die dritte Klassifikationsgruppe fallen jene Packeinheiten, die im Lagersystem zwischen einer Aufgabe- und Abgabestation zwar vollautomatisiert gelagert, aber manuell verteilt werden. Die Packeinheiten der dritten Klassifikationsgruppe, beispielsweise Artikel mit niedriger Umschlaghäufigkeit (C-Artikel), wie Sperrigteile, verbleiben im Eingangslager und werden von einem Lagerarbeiter mittels eines Verteilwagens aus einem Lagerkanal entnommen und auf ein erstes Ausliefergebinde geladen. Da ein Transport durch ein automatisiertes Verteilsystem entfällt, können Störungen durch die Verteilung vermieden werden.

Von Vorteil ist auch die Maßnahme nach Anspruch 16, da innerhalb des Eingangslagers zumindest in Lagerbereichen die Lagerregale mit annähernd demselben Sortiment an Artikeln (Packeinheiten) bestückt werden und das Vorratseinheiten-Verteilsystem, insbesondere die Regalförderfahrzeuge, in seinen Förderabschnitten annähernd gleichmäßig ausgelastet ist.

Gemäß der Maßnahme nach Anspruch 17 können die auf den Aufgabestationen angelieferten Vorratseinheiten auf der Förderumlaufbahn gepuffert und auf jede Gasse des Eingangslagers verteilt werden. Die Vorratseinheiten werden zu den Gassen gefördert, wo sie benötigt werden. Dadurch wird eine optimale Angleichung des Lagerbestandes in den Lagerregalen erreicht.

Besonders vorteilhaft ist auch die Maßnahme nach Anspruch 18, da die Vorratseinheiten aus einem Lagerregal im betreffenden Lagerbereich ausgelagert und durch die diesem zugeordnete Förderumlaufbahn zu zumindest einer Depalettiereinrichtung gefördert werden. Eine Umlagerung dieser Vorratseinheiten von der einen Förderumlaufbahn auf die andere Förderumlaufbahn ist nicht notwendig. Die Vorratseinheiten werden auf kürzestem Wege der jeweiligen Depalettiereinrichtung angeliefert, was auch zusätzlich durch die Anordnung der Förderumlaufbahnen in unmittelbarer Nähe an einer Stirnseite des Eingangslagers begünstigt wird. Die Förderumlaufbahnen sind vorzugsweise durch eine oder mehrere Verbindungsbahnen miteinander verbunden, wodurch es möglich ist, die Vorratseinheiten zwischen den Förderumlaufbahnen auszutauschen und an jeder Depalettiereinrichtung anzubieten.

Eine vorteilhafte Maßnahme ist auch im Anspruch 19 beschrieben, da die Versandeinheiten nicht in den gleichen Lager- und Verteilprozessen, wie die Packeinheiten gefördert werden, sondern über eigenständige Lager- und Verteilprozesse verfügt. Mit anderen Worten werden zu einem Kundenauftrag gleichzeitig in mehreren Bereichen des Lagersystems Kommissionier-, Lager- und/oder Verteilprozesse ausgeführt. Durch die Parallelisierung der Lager-, Kommissionier- und/oder Verteilprozesse kann der Durchsatz an Liefer- und Versandeinheiten erhöht oder bei gleichem Durchsatz das Lagersystem mit wesentlich kürzerer Betriebszeit betrieben werden.

Von Vorteil ist auch die Ausgestaltung nach Anspruch 21, da jene Packeinheiten, die mit dem automatisierten Packeinheiten-Verteilsystem nicht durch alle seine Förderabschnitte gefördert werden können, im Lagersystem getrennt von den Packeinheiten der ersten Klassifikationsgruppe behandelt werden. Dabei kann es sich beispielsweise um Packeinheiten handeln, die besondere Abmessungen aufweisen, bruchgefährdet sind oder nur eine sehr geringe Formstabilität (biegeschlaff) aufweisen, und von vorhinein in einer Packstation auf Ladungsträger, insbesondere Behälter, umgepackt und durch ein Ladungsträger-Verteilsystem zum zweiten Zwischenlager (Nachschublager) transportiert und in diesem die Ladungsträger gepuffert werden. Dadurch werden Störungen während des Transportes der Packeinheiten im Lagersystem weitestgehend ausgeschlossen.

Die Ausgestaltung nach Anspruch 23 ist von Vorteil, da eine Kreissortiermaschine (Hochleistungssortiermaschine), insbesondere ein Querbandsorter, in kontinuierlichem Transportumlauf angetrieben werden kann und die Packeinheiten von einem Einschleusförderer am Sortiereingang auf eine Einlagerbahn am Sortierausgang ohne Stillstand des Transportumlaufs gefördert werden können. Dadurch wird eine hohe Durchsatzleistung an der Kreissortiermaschine erreicht. Ferner benötigt die Kreissortiermaschine nur eine geringe Anzahl von elektrischen Antriebsmotoren und kann selbst bei der hohen Durchsatzleistung der Energieverbrauch niedrig gehalten werden. Durch die geringe Anzahl von Antrieben wird auch eine hohe Verfügbarkeit der Kreissortiermaschine erreicht. Ein weiterer Vorteil liegt auch darin, dass die mittels der Depalettiereinrichtung(en) von der Vorratseinheit entnommenen Packeinheiten nach ihrer Vereinzelung über die Kreissortiermaschine zu jeder Gasse und damit zu jedem Lagerkanal auf kurzen Förderstrecken gefördert werden. Damit ist auch die grundlegende Bedienung für die Einlagerung der Packeinheiten gemäß den Kommissionieraufträgen an beliebigen, freien Lagerkanälen nach dem chaotischen Lagerungsprinzip möglich. Dadurch steigt auch die Wirtschaftlichkeit des Lagersystems an. Darüber hinaus ist die Verwendung der Kreissortiermaschine, insbesondere des Querbandsorters, von Vorteil, da während des Transportumlaufs zwischen einer Transportunterlage und der Packeinheit keine Relativbewegungen auftreten und dadurch auch bei hohen Förder- und Sortiergeschwindigkeiten ein sicherer Transport möglich ist.

Zum besseren Verständnis der Erfindung wird diese anhand der nachfolgenden Figuren näher erläutert.

Es zeigen jeweils in stark schematisch vereinfachter Darstellung:
- Fig. 1: eine Draufsicht auf ein Eingangslager am Wareneingang des erfindungsgemäßen Lagersystems;
- Fig. 2: das Eingangslager nach Fig. 1 in Seitenansicht, gemäß den Linien II - II in Fig. 1;
- Fig. 3: einen Ausschnitt vom Eingangslager und Depalettiereinrichtungen des erfindungsgemäßen Lagersystems, in Draufsicht;
- Fig. 4: Vereinzelungsbahnen, einen Ausschnitt einer Kreissortiermaschine sowie eine Packstation des erfindungsgemäßen Lagersystems, in Draufsicht;
- Fig. 5: eine Detaildarstellung einer Vereinzelungsbahn nach Fig. 4;
- Fig. 6: eine Draufsicht auf ein erstes Zwischenlager für die Lagerung von Packeinheiten und die Kreissortiermaschine;
- Fig. 7: eine Ausschnittsvergrößerung einer Einlagerbahn und Lagerregale des ersten Zwischenlagers;
- Fig. 8: das erste Zwischenlager mit den Lagerregalen, Auslagerbahnen und Bereitstellungsbahnen für Packeinheitengruppen;
- Fig. 9: eine Seitenansicht auf eine Sortierfördereinrichtung, gemäß den Linien IX - IX nach Fig. 8;
- Fig. 10: eine Draufsicht auf eine erste Beladestation mit mehreren Stapeleinrichtungen und Wickelstationen des erfindungsgemäßen Lagersystems;
- Fig. 11: eine Seitenansicht auf die Packstation nach Fig. 4;
- Fig. 12: eine Draufsicht auf ein zweites Zwischenlager für die Lagerung von Versand- und Versorgungsträgern und einen Auftragspuffer;
- Fig. 13: das zweite Zwischenlager nach Fig. 12 in Stirnansicht;
- Fig. 14: eine Draufsicht auf das Eingangslager am Warenausgang des erfindungsgemäßen Lagersystems;
- Fig. 15: eine modifizierte Ausführung des Lagersystems, dargestellt in Form eines Blockdiagramms.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

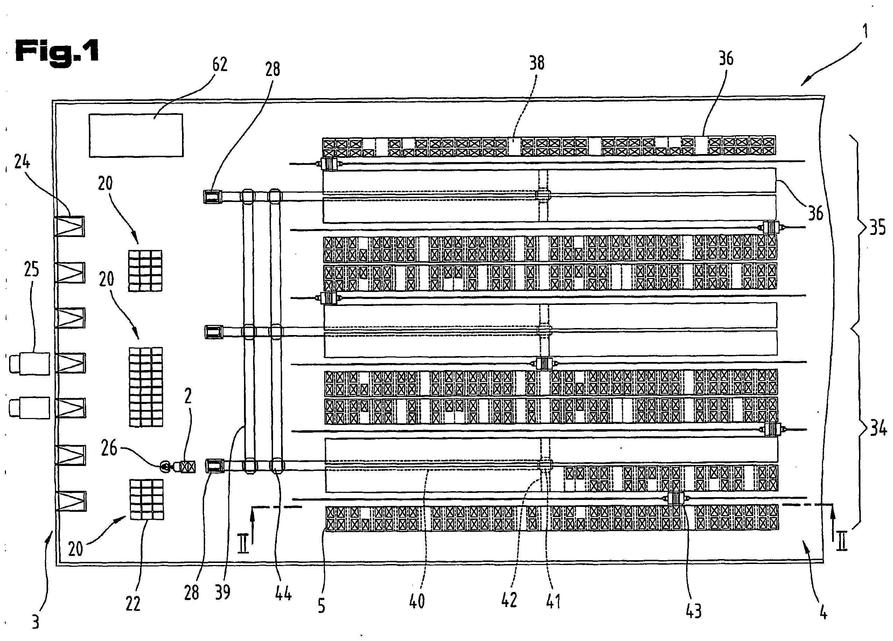

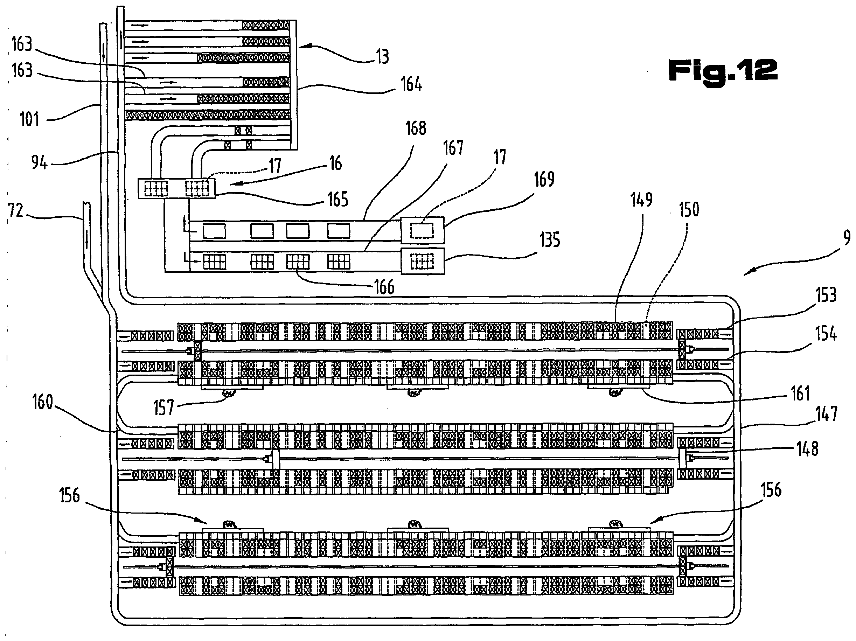

In den gemeinsam beschriebenen Fig. 1 bis 15 ist ein erfindungsgemäßes, insbesondere automatisiertes Lagersystem 1, insbesondere zum Lagern, Verteilen und/oder Kommissionieren von verschiedenen Packeinheiten 2 (Collis) gezeigt. Das Lagersystem 1 umfasst einen Wareneingang 3, ein Eingangslager 4 zur temporären Lagerung von Vorratseinheiten 5, Depalettiereinrichtungen 6, 7, ein erstes Zwischenlager 8 zur temporären Lagerung der Packeinheiten 2, ein zweites Zwischenlager 9 zur temporären Lagerung von Versand- und Versorgungsträger, zumindest einen Kommissionierplatz im zweiten Zwischenlager 9, einen Auftragspuffer 13 für die Versandträger, eine erste Beladestation 14 zum Beladen der Packeinheiten 2 auf ein erstes Ausliefergebinde 15, eine zweite Beladestation 16 zum Beladen der Versandträger auf ein zweites Ausliefergebinde 17, einen Konsolidierungsbereich 18, ein Vorratseinheiten-Verteilsystem, ein Packeinheiten-Verteilsystem und ein Ladungsträger-Verteilsystem sowie einen Warenausgang 19. Die Anzahl der Depalettiereinrichtungen ist frei wählbar. Zwischen dem Wareneingang 3 und dem Eingangslager 4 sind Eingangspufferzonen 20 und im Konsolidierungsbereich 18 Ausgangspufferzonen 21 vorgesehen. Die Eingangs- und Ausgangspufferzonen 20, 21 weisen jeweils in Reihe hintereinander angeordnete Stellplätze 22, 23 auf, die in einer Ausführung beispielsweise am Boden des Lagergebäudes ausgebildet und durch Markierungen gekennzeichnet sind.

Am Wareneingang 3 sind mehrere Anlieferungsstationen 24 vorgesehen, an denen Lieferanten-Transportfahrzeuge 25, insbesondere Lastwagen, andocken, und von einem Lagerarbeiter 26 die Vorratseinheiten 5 auf einem Verteilwagen 27 übernommen und entweder in einer Eingangspufferzone 20 auf wenigstens einen Stellplatz 22 zwischengelagert oder zu einer das Vorratseinheiten-Verteilsystem auf einer den Eingangspufferzonen 20 zugewandten Seite aufweisenden Aufgabestation 28 transportiert werden.

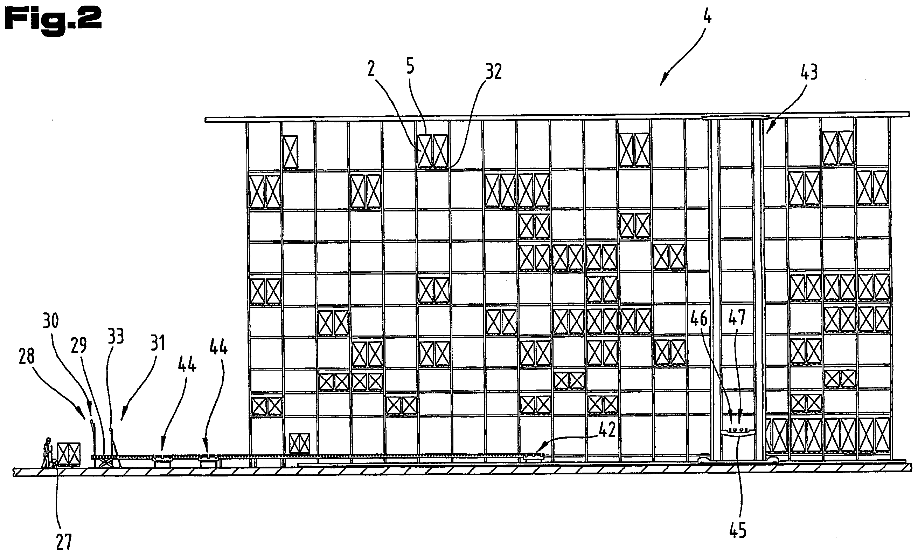

Wie in der Fig. 2 besser ersichtlich, weist jede Aufgabestation 28 einen zwischen einer abgesenkten Übernahmestellung und einer angehobenen Förderstellung verstellbaren Hubtisch auf, der mit einer Förderbahn 29 ausgestattet ist. Die Förderbahn 29 ist beispielsweise durch, mit Abstand parallel verlaufenden Rollen gebildet. Genauso gut kann die Förderbahn 29 auch durch einen Bandförderer und dgl. gebildet sein.

Die Aufgabestationen 28 sind jeweils mit einer Ein- und/oder Ausgabevorrichtung 30 ausgestattet, die durch eine optische und/oder akustische Anzeige, beispielsweise einen Bildschirm, gebildet ist, mittels welcher vom Rechner, insbesondere Lagerverwaltungsrechner, einem Lagerarbeiter 26 angewiesen wird, welche Vorratseinheit 5 auf welcher Aufgabestation 28 aufgegeben werden muss. Dadurch wird nicht nur der Warenfluss koordiniert, sondern auch die Zuteilung von Vorratseinheiten 5 auf eine für diese nicht bestimmte Aufgabestation 28 vermieden.

Das Vorratseinheiten-Verteilsystem umfasst an jeder Aufgabestation 28 eine Prüfstation 31, mittels welcher die Qualität eines Anliefergebindes 32, der Beladungszustand auf dem Anliefergebinde 32 und/oder eine Eingangskontrolle der Packeinheiten 2 noch vor der Einlagerung der Vorratseinheit 5 in das Eingangslager 4 durchgeführt wird.

Des Weiteren werden am Wareneingang 3, vorzugsweise an der Prüfstation 31 die Packeinheiten 2 über eine Packeinheiten-Identifikationseinrichtung, beispielsweise ein Lesegerät 33 oder Bildverarbeitungssystem identifiziert. Beispielsweise werden Daten aus einem von Seiten des Herstellers/Lieferanten der Packeinheiten 2 auf das Anliefergebinde 32, beispielsweise EURO-Palette, Chep-Palette, Düsseldorfer-Palette und dgl., aufgebrachten Datenträger ausgelesen, insbesondere ein Barcode gescannt. Der Datenträger kann aber auch durch einen Transponder, Magnetstreifen oder eine RFID-Etikette (Radio Frequency Identification Device) und dgl. gebildet sein.

Danach werden die elektronisch identifizierten Packeinheiten 2 mit dem Anliefergebinde 32 als Vorratseinheit 5 von der Hubstation abtransportiert und in das Eingangslager 4 eingelagert. Auf dem Anliefergebinde 32 sind die Packeinheiten 2 bevorzugt sortenrein gestapelt.

Können die Daten nur unzureichend ausgelesen werden, weil der Datenträger beispielsweise in Folge des Transportes der Vorratseinheiten 5 zum Lagersystem 1 teilweise beschädigt wurde, wird dem Lagerarbeiter 26 eine Fehlermeldung an der Ausgabevorrichtung 30 angezeigt. Der Lagerarbeiter 26 hat nun dafür zu sorgen, dass er an der Eingabevorrichtung 30 beispielsweise aus einer Packeinheiten-Bestandsliste, die das gesamte Sortiment von Packeinheiten 2 repräsentiert, die Packeinheit 2 identifiziert, welche die Vorratseinheit 5 enthält. Durch Auswahl der entsprechenden Packeinheit 2 aus der Bestandsliste wird ein neuer Datenträger hergestellt, beispielsweise eine neue Barcodeetikette an einem Drucker ausgedruckt. Der Datenträger wird am Anliefergebinde 32 befestigt. Erst danach wird die Vorratseinheit 5 vom Hubtisch abtransportiert und in das Eingangslager 4 eingelagert.

Das als Hochregallager ausgebildete Eingangslager 4 ist in Lagerbereiche 34, 35 aufgeteilt und umfasst parallel nebeneinander angeordnete Lagerregale 36, wobei zwischen den mit Abstand einander gegenüberliegenden Lagerregalen 36 eine Gasse 37 ausgebildet ist. Die Lagerregale 36 weisen in einem Rasterabstand vertikal übereinander liegende Lagerebenen auf. In jeder Lagerebene sind mehrere "virtuelle" Lagerkanäle 38 angeordnet, wobei der Lagerkanal 38 in seiner Längserstreckung zumindest einen oder mehrere Lagerplätze aufweist und in einem Lagerkanal 38 zumindest zwei mittig zueinander ausgerichtete Vorratseinheiten 5 in einer Reihe hintereinander abgelegt werden können.

Das Eingangslager 4 weist zusätzlich das automatisierte Vorratseinheiten-Verteilsystem auf, welches in der Anliefer- und Versandebene (erste Ebene - Fig. 1, 2) in mehreren Förderabschnitten eine geschlossene Förderumlaufbahn 39, die Aufgabestationen 28, die mit einem Ende an die Aufgabestationen 28 anschließenden Einlagerbahnen 40, die an einem von den Aufgabestationen 28 abgewandten Ende anschließenden Verteilerbahnen 41 und zu beiden Seiten der Verteilerbahnen 40 angeordneten Bereitstellungsbahnen 42 sowie rechnergesteuerte Regalförderfahrzeuge 43 umfasst. Die Einlagerbahnen 40 sind jeweils durch einen Stauförderer gebildet und weisen in Förderrichtung hintereinander angeordnete Stauplätze auf. Der Stauförderer ist je Stauplatz mit wenigstens einem von einem Antriebsmotor angetrieben Fördermittel ausgestattet. Die Förderumlaufbahn 39 ist beispielsweise durch einen Kettenförderer gebildet und weist in den Kreuzungsbereichen Vorratseinheiten-Umsetzfördervorrichtungen 44 auf. Jedes Regalförderfahrzeug 43, insbesondere Regalbediengerät, ist in der Gasse 37 entlang eines Schienensystems an der Regalfront verfahrbar und mit einer heb- und senkbaren Plattform 45 ausgestattet. Auf der Plattform 45 ist eine Lastaufnahmevorrichtung angeordnet, die wenigstens eine Fördervorrichtung 46 und eine relativ zur Plattform nach beiden Richtungen ausfahrbare Ein- und Auslagerungsvornchtung 47, insbesondere Teleskopkabeln, aufweisen, mittels welcher die Vorratseinheiten 5 in einen Lagerkanal 38 des links oder rechts von der Gasse 37 aufgestellten Lagerregals 36 ein- bzw. ausgelagert werden können.

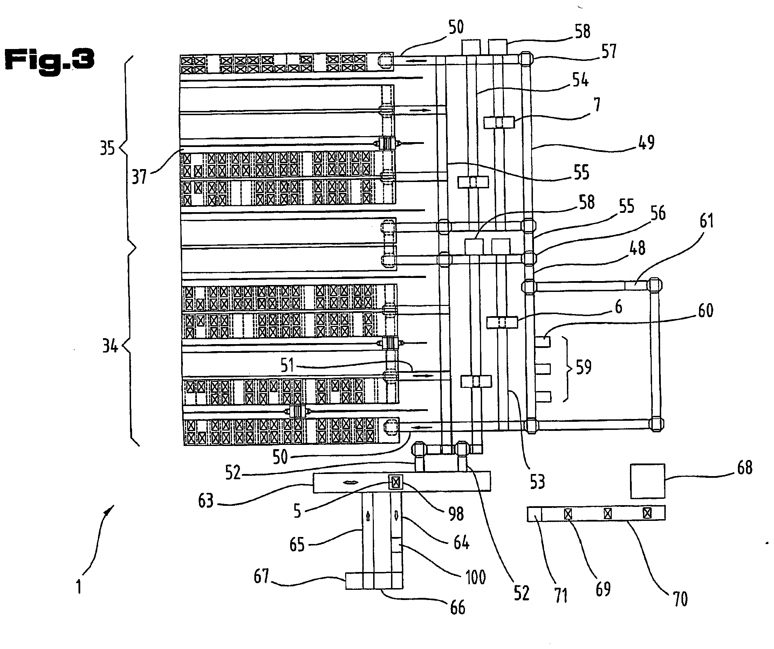

In der Umlagerebene (zweite Ebene - Fig. 3) umfasst das Vorratseinheiten-Verteilsystem in mehreren Förderabschnitten an einer der Stirnseiten des Eingangslagers 4 und jeweils einem Lagerbereich 34, 35 zugeordnete, geschlossene Förderumlaufbahnen 48, 49 und jeweils an diese anschließende Ein- und/oder Auslagerbahnen 50, 51 und an eine Förderbahn für Ladungsträger anschließende Förderbahnen 52 sowie jeweils an die Förderumlaufbahn 48, 49 anschließende Förderbahnen 53, 54. Die beispielsweise durch einen Kettenförderer gebildeten Förderumlaufbahnen 48, 49 können zusätzlich durch eine Verbindungsbahn 55 miteinander verbunden sein und weisen in den Kreuzungsbereichen Vorratseinheiten-Umsetzfördervornchtungen 56, 57 auf.

Die Vorratseinheiten 5 werden von den Regalförderfahrzeugen 43 aus den Lagerkanälen 38 ausgelagert und zu den Ein- und/oder Auslagerbahnen 50, 51 gefördert. Dort angekommen, werden die Vorratseinheiten 5 durch die Auslagerbahnen 51, Teilabschnitte der Förderumlaufbahnen 48, 49 und den Förderbahnen 53, 54 zu den Depalettiereinrichtungen 6, 7 angefördert. An jeder Depalettiereinrichtung 6, 7 werden die Vorratseinheiten 5 durch einen Hubtisch - wie in strichlierte Linien eingetragen - in eine dritte Ebene angehoben, in der die Depalettierung der Packeinheiten 2, insbesondere der jeweils obersten Stapellage erfolgt.

Nach dem Depalettiervorgang werden die an jeder Depalettiereinrichtung 6, 7 zum Teil depalettierten Vorratseinheiten 5 oder die leeren Anliefergebinde 32 durch den Hubtisch auf die Umlagerebene abgesenkt und auf den Förderbahnen 53, 54 abgefördert. Die zum Teil depalettierten Vorratseinheiten 5 (Anbruchpaletten) werden durch die Förderbahnen 53, 54, Teilabschnitte der Förderumlaufbahnen 48, 49 und die Einlagerbahnen 50 zu den Regalförderfahrzeugen 43 gefördert und von diesen wiederum in das Eingangslager 4 eingelagert. Die leeren Anliefergebinde 32 werden über die Förderbahnen 53, 54 zu einer Stapelvorrichtung 58 gefördert und von dieser übereinander gestapelt. Die Stapel werden, wenn sie eine bestimmte Höhe erreicht haben, über Teilabschnitte der Förderumlaufbahnen 48, 49 zu einer Sortiereinrichtung 59 gefördert, wo die unterschiedlichen Typen von Anliefergebinden 32 sortenrein sortiert und an Sammelstationen 60 sortenrein gestapelt werden. Die sortenreinen Stapel werden sodann zu einer Hebevorrichtung 61 gefördert und von der Umlagerebene auf die Anliefer- und Versandebene abgesenkt und zur neuerlichen Verwendung an einem Pufferplatz 62 (Fig. 1) bereitgestellt.

Der Rechner, insbesondere Lagerverwaltungsrechner, umfasst unter anderem ein Vorratseinheiten-Zuteilungsmodul, mittels welchem eine Lagerkennzahl von jedem Lagerregal 36, wie der Lagerfüllgrad, Lagerdurchsatz und/oder Lagerbestand an Vorratseinheiten 5, und/ oder eine Leistungskennzahl in einem Förderabschnitt des Vorratseinheiten-Verteilsystems, wie die Auslastung an den Aufgabestationen 28, der Einlagerbahnen 40, der Regalförderfahrzeuge 43, der Förderumlaufbahnen 39, 48, 49 und/oder Depalettiereinrichtungen 6, 7 ermittelt wird. Eine elektronische Steuerung, beispielsweise eine speicherprogrammierbare Steuerung, umfasst den Rechner.

Der Lagerbestand definiert die Menge der in einem Lagerregal 36 eingelagerten unterschiedlichen Artikel. Der Lagerdurchsatz ist durch die Anzahl der Ein- und Auslagerungen der Vorratseinheiten 5 in einen Lagerkanal 38 bzw. aus einem Lagerkanal 38 definiert. Der Lagerfüllgrad gibt das Verhältnis zwischen vorhandenen Lagerplätzen und belegten Lagerplätzen an.

Die Auslastung des Vorratseinheiten-Verteilsystems kann über den Durchsatz oder die Durchlaufzeit der Vorratseinheiten 5 an den Aufgabestationen 28, der Einlagerbahnen 40 und/oder der Anzahl der Ein- und Auslagervorgänge ermittelt werden. Zur Erfassung des Durchsatzes, der Durchlaufzeit und/oder der Anzahl der Ein- und Auslagervorgänge werden beispielsweise Sensoren verwendet und/oder vom Rechner berechnet.

Der Istwert der Lagerkennzahl der Lagerregale 38 und/oder Leistungskennzahl wird mit einem Sollwert der Lagerkennzahl der Lagerregale 38 und/oder der Leistungskennzahl in einem Vergleichsmodul des Rechners, insbesondere Lagerverwaltungsrechners, verglichen. Unterschreitet der Istwert der Lagerkennzahl in einem der Lagerbereiche 34, 35 und/ oder Leistungskennzahl in einem Förderabschnitt des Vorratseinheiten-Verteilsystems den Sollwert, werden die Vorratseinheiten 5 in diesem Lagerbereich 34, 35 eingelagert. Nähert sich der Istwert hingegen dem Sollwert an oder erreicht dieser den Sollwert, bedeutet dies, dass beispielsweise in einem Lagerbereich 34, 35 der maximale Lagerbestand, Lagerdurchsatz und/oder Lagerfüllgrad erreicht ist und die Vorratseinheiten 5 in jenem Lagerbereich 34, 35 eingelagert werden müssen, in welchem der Istwert den Sollwert unterschreitet, daher noch Lagerkanäle 38 unbelegt sind. Der Istwert der Lagerkennzahl und/oder die Leistungskennzahl wird über Überwachungsorgane, insbesondere Sensoren erfasst und/oder vom Rechner berechnet. Durch die Verteilung der Vorratseinheiten 5 im Eingangslager 4 wird eine gegenseitige Angleichung der Lagerkennzahlen in den beiden Lagerbereichen 34, 35 erreicht.

Wie oben beschrieben, werden die Vorratseinheiten 5 durch einen Hubtisch von der Umlagerebene in eine dritte Ebene angehoben und von der Depalettiereinrichtung 6, 7 vorzugsweise eine Stapellage nach der anderen gemäß einem Kommissionierauftrag oder Nachschubauftrag depalettiert. Die depalettierte Stapellage wird von der Depalettiereinrichtung 6, 7 auf eine Vereinzelungsbahn 75 gefördert, die mit einer Kreissortiermaschine 76 verbunden ist. Die Vereinzelungsbahn 75 bildet eine Vereinzelungseinrichtung aus.

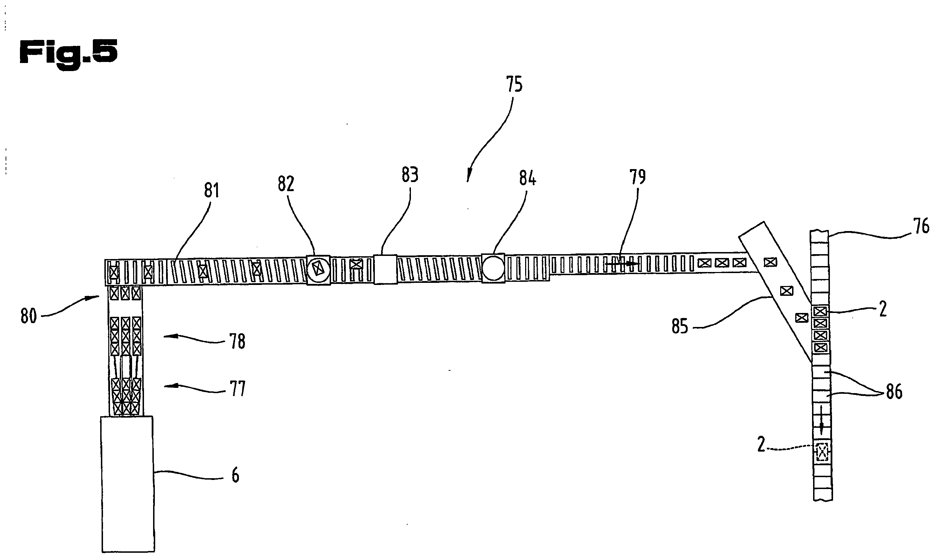

Die Vereinzelungsbahn 75, wie sie in Fig. 5 näher dargestellt ist, weist in einem ersten Förderabschnitt eine Einrichtung 77 zum Auflösen der Lage an Packeinheiten 2 in parallele Reihen und eine Einrichtung 78 zur Abstandsbildung zwischen in Förderrichtung 79 aufeinander folgenden Reihen von Packeinheiten 2 sowie eine Schiebeeinrichtung 80 auf, mit letzterer die Packeinheiten 2 auf einen zweiten Förderabschnitt gefördert werden. Die nun im zweiten Förderabschnitt vereinzelten Packeinheiten 2 werden über eine Ausrichtvorrichtung, beispielsweise schräg gestellte Förderrollen 81, mit einer ihrer Kanten ausgerichtet. Im zweiten Förderabschnitt sind in Förderrichtung 79 hintereinander eine erste Drehvorrichtung 82, eine Kippvorrichtung 83 und eine zweite Drehvorrichtung 84 angeordnet. Mittels der Drehvorrichtungen 82, 84 können Packeinheiten 2 unterschiedlicher Abmessungsklassen in eine für ihre Übergabe auf eine Kreissortiermaschine 76 erforderliche Ausrichtung gedreht werden.

Wird eine Packeinheit 2 der kleineren Abmessungsklasse im Quertransport, daher mit ihrer kürzeren Seite in Förderrichtung 79 gefördert, wird diese an der ersten Drehvorrichtung 82 um 90° nachgedreht und in dieser Ausrichtung über einen Einschleusförderer 85 im Quertransport auf eine Transportunterlage 86 der Kreissortiermaschine 76 übergeben, wie Fig. 5 in vollen Linien gezeigt.

Wird eine Packeinheit 2 der größeren Abmessungsklasse im Längstransport, daher mit ihrer längeren Seite in Förderrichtung 79 gefördert, wird diese erst an der zweiten Drehvorrichtung um 90° nachgedreht und in dieser Ausrichtung über den Einschleusförderer 85 im Längstransport auf zwei Transportunterlagen 86 der Kreissortiermaschine 76 übergeben, wie Fig. 5 in strichlierten Linien gezeigt.

Der unmittelbar an der Vereinzelungsbahn 75 anschließende Einschleusförderer 85 ist beispielsweise durch einen Bandförderer gebildet und schließt seine Längsachse mit der Vereinzelungsbahn 75 einen Winkel von etwa 120° ein. Dadurch kann eine nahezu ruckfreie Übergabe der Packeinheiten 2 von dem Einschleusförderer 85 auf die Kreissortiermaschine 76 erreicht werden.

Wird eine Packeinheit 2 mit kritischer Schwerpunktlage (Verhältnis zwischen kleinster Seitenlänge und Höhe) transportiert und neigt diese zum Kippen, wird diese an der Kippvorrichtung 83 umgelegt und danach an der zweiten Drehvorrichtung 84 um 90° nachgedreht, sofern die Packeinheit 2 mit ihrer längeren Seite in Förderrichtung 79 gefördert wird.

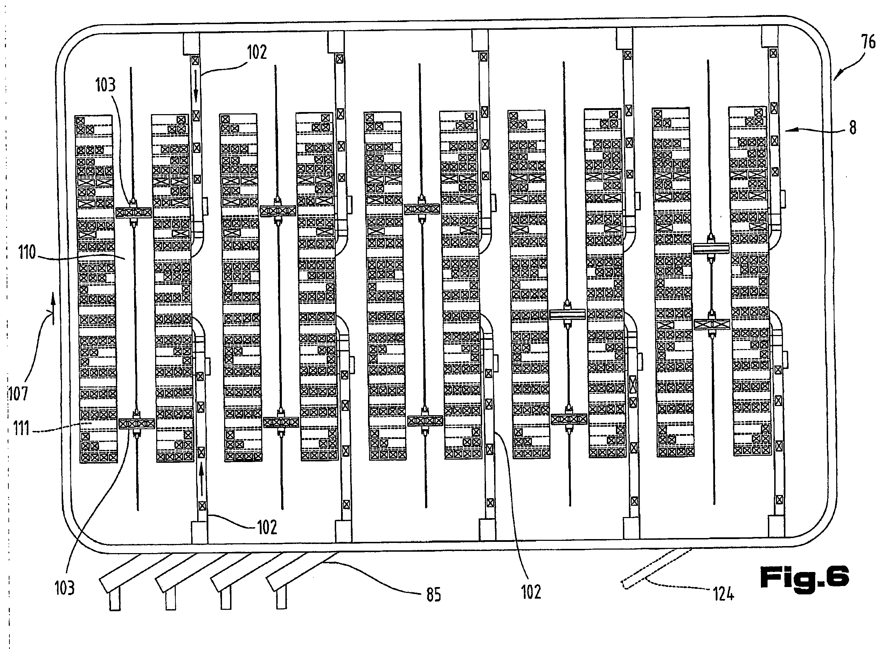

Die Packeinheiten 2 der ersten Klassifikationsgruppe werden durch das Packeinheiten-Verteilsystem im Lagersystem 1 nach ihrer Vereinzelung durch mehrere Sortierstufen (Fig. 6 bis 10) gefördert. Das automatisierte Packeinheiten-Verteilsystem umfasst in mehreren Förderabschnitten die Vereinzelungsbahnen 75, die Kreissortiermaschine 76, die Förderbahn 93, Einlagerbahnen 102, rechnergesteuerte Regalförderfahrzeuge 103, Sortierfördereinrichtungen 104 und Auslagerbahnen 121.

In der ersten Sortierstufe ist die in Fig. 6 dargestellte Kreissortiermaschine 76 vorgesehen, die vorzugsweise durch einen Querbandsorter gebildet ist. Dieser umfasst in Richtung eines Transportumlaufs 107 an einem Rahmen verfahrbar gelagerte Transportschlitten und auf diesem angeordnete, unabhängig voneinander steuerbare Linearförderer mit einer quer zum Transportumlauf 107 verlaufenden Förderrichtung. Die Linearförderer, beispielsweise Bandförderer, bilden jeweils eine Transportunterlage 86 aus. Als Kreissortiermaschine 76 kann aber genauso gut ein ringförmiger Schuhsorter verwendet werden, wie er beispielsweise in der WO 2008/041838 A1 offenbart ist.

Die Kreissortiermaschine 76 ist auf der Seite eines Sortiereingangs mit den Vereinzelungsbahnen 75 und auf der Seite eines Sortierausgangs mit den Einlagerbahnen 102 verbunden. Innerhalb des Transportumlaufs 107 der Kreissortiermaschine 76 ist das erste Zwischenlager 8 angeordnet, welches parallel nebeneinander angeordnete Lagerregale 108, 109 aufweist. Zwischen den mit Abstand einander gegenüberliegenden Lagerregalen 108, 109 ist eine Gasse 110 ausgebildet. Die Lagerregale 108, 109 sind in einer bevorzugten Ausführung durch Fachbodenregale gebildet und werden die Packeinheiten 2 ohne zusätzliches Ladehilfsmittel, wie Tablar, Palette und dgl., direkt auf den Fachboden abgelegt. Die Lagerregale 108, 109 weisen in einem Rastabstand vertikal übereinander liegende Lagerebenen auf, wobei in jeder Lagerebene mehrere "virtuelle" Lagerkanäle 111 nebeneinander angeordnet sind. Jeder Lagerkanal 111 weist in seiner Längserstreckung zumindest zwei Lagerpositionen auf und können entweder zwei Packeinheiten 2 einer ersten Abmessungsklasse (Länge zwischen ca. 200 mm und ca. 500 mm und Breite zwischen ca. 200 mm und ca. 350 mm) oder vier Packeinheiten 2 einer zweiten Abmessungsklasse (Länge zwischen ca. 500 mm und ca. 800 mm und Breite zwischen ca. 300 mm und ca. 600 mm) in einer Reihe hintereinander abgelegt werden.

Das Regalförderfahrzeug 103, insbesondere Regalbediengerät, ist in der Gasse 110 entlang eines Schienensystems an der Regalfront verfahrbar und mit einer heb- und senkbaren Plattform 112 ausgestattet. Auf der Plattform 112 ist eine schematisch eingetragene Ein- und Auslagervorrichtung angeordnet, mittels welcher Packeinheiten 2 in einen Lagerkanal 111 eingelagert bzw. aus einem Lagerkanal 111 ausgelagert werden können. Ebenso ist auf der Plattform 112 eine Fördervorrichtung (nicht dargestellt) angeordnet, mittels welcher Packeinheiten 2 zwischen Bereitstellungsbahnen 113, 114 und dem Regalförderfahrzeug 103 gefördert werden können. Die Fördervorrichtung und Ein- und Auslagervorrichtung bilden eine Lastaufnahmevorrichtung. An der ersten Bereitstellungsbahn 113 werden Packeinheiten 2 der ersten Abmessungsklasse und an der zweiten Bereitstellungsbahn 114 Packeinheiten 2 der zweiten Abmessungsklasse bereitgestellt.

Die Einlagerbahn 102 erstreckt sich über einen Teil der Länge eines Lagerregals 108, 109 und weist in ihrem von der Kreissortiermaschine 76 abgewandten Endbereich die Bereitstellungsbahnen 113, 114 und einen Pufferbahnhof 115 auf. Auf der gegenüber liegenden Seite des Pufferbahnhofes 115 ist ein Ausschleuser 116 angeordnet. Der Pufferbahnhof 125 weist einen nicht dargestellten Einschleuser auf, der beispielsweise durch einen Band- oder Riemenförderer und dgl. gebildet ist. Ein- und Ausschleuser können auch eine Einheit bilden. Der Pufferbahnhof 115 und Ausschleuser 116 bilden eine Sortiereinrichtung. Die Sortiereinrichtung, insbesondere der Ein- und Ausschleuser werden vom Rechner (Steuerung) angesteuert, wenn eine Packeinheit 2 von der Einlagerbahn 102 auf den Pufferbahnhof 115 auszuschleusen oder vom Pufferbahnhof 115 wieder auf die Einlagerbahn 102 einzuschleusen ist. In einem der Kreissortiermaschinen 76 zugewandten Endbereich ist eine Drehvorrichtung 117 vorgesehen, mittels welcher Packeinheiten 2 der zweiten Abmessungsklasse um 90° nachgedreht werden können.

In der ersten Sortierstufe werden die Packeinheiten 2 am Sortiereingang über die Einschleusförderer 85 auf die Kreissortermaschine 76 und auf dieser in Richtung des Transportumlaufs 107 gefördert, ehe sie nach vom Rechner, insbesondere Lagerverwaltungsrechner, vorgegebenen Sortierkriterien auf eine der Einlagerbahnen 102 ausgeschleust werden. Als Sortierkriterium wird eine Lagerkennzahl oder eine Leistungskennzahl des Packeinheiten-Verteilsystems in einem seiner Förderabschnitte definiert. Der Lagerbedarf definiert die Lagerkennzahl.

Werden durch den Rechner, insbesondere Lagerverwaltungsrechner, Kommissionieraufträge erfasst, werden diesen Lagerkanälen 110 zugewiesen und als Auftragskanäle definiert. Dabei können vom Rechner Lagerkanäle 110 in unterschiedlichen Lagerregalen 108, 109 nach dem chaotischen Lagerungsprinzip gewählt werden. Die Kommissionieraufträge umfassen jeweils ein oder mehrere gleiche oder verschiedene Packeinheiten 2, die gemäß den Kommissionieraufträgen in die Auftragskanäle 118 eingelagert werden. Mit anderen Worten ist der Lagerbedarf an Packeinheiten 2 in den betreffenden Auftragskanälen 118 in den unterschiedlichen Lagerregalen 107 dem Rechner bekannt und werden von der Kreissortiermaschine 76 die Packeinheiten 2 am Sortierausgang durch die betreffende Einlagerbahn 102 an jene Gasse 110 bzw. jenes Regalförderfahrzeug 103 gefördert, an der ein Lagerbedarf vorliegt.

Das Sortierkriterium kann aber auch durch die Leistungskennzahl des Packeinheiten-Verteilsystems, insbesondere die Auslastung des Packeinheiten-Verteilsystems in einem seiner Förderschnitte definiert werden. Wird ein Sollwert der Leistungskennzahl in einem Förderabschnitt des Packeinheiten- Verteilsystems, beispielsweise die maximale Auslastung (Leistungsgrenze) der Einlagerbahn 102 oder des Regalförderfahrzeuges 103 erreicht, wird eine Packeinheit 2, auch wenn sie vor dem Hintergrund, dass sie in einem Lagerkanal 111 dieser Gasse 110 benötigt würde, nicht in diese Gasse 110 ausgeschleust, sondern zur nächsten Gasse 110 gefördert, an der auch ein Lagerbedarf dieser Packeinheit 2 besteht, und der Sollwert der Leistungskennzahl nicht erreicht wurde. Die Auslastung des Packeinheiten-Verteilsystems kann über den Durchsatz oder die Durchlaufzeit der Packeinheiten 2 an der Sortierkreismaschine 76, Einlagerbahnen 102, Regalförderfahrzeuge 103 und/oder die Anzahl der Ein- und Auslagervorgänge ermittelt werden. Zur Erfassung des Durchsatzes, der Durchlaufzeit und/oder der Anzahl der Ein- und Auslagervorgänge werden beispielsweise Sensoren verwendet und/oder vom Rechner berechnet.

Der Istwert der Leistungskennzahl wird mit dem Sollwert der Leistungskennzahl in einem Vergleichsmodul des Rechners verglichen. Unterschreitet der Istwert der Leistungskennzahl in einem Förderabschnitt des Packeinheiten-Verteilsystems den Sollwert, können Packeinheiten 2 in diesen Förderabschnitt gefördert werden. Der Istwert der Lagerkennzahl und/oder Leistungskennzahl wird über Überwachungsorgane, insbesondere Sensoren erfasst und/oder vom Rechner berechnet.

Über die Kreissortiermaschine 76 können nun die Packeinheiten 2 durch die Einlagerbahnen 102 auf die Gassen 110 bzw. Regalförderfahrzeuge 103 entsprechend der erfassten Kommissionieraufträge zugeteilt werden. In vorteilhafter Weise wird ein Querbandsorter verwendet, da dieser in kontinuierlichem Transportumlauf angetrieben werden kann und die Packeinheiten 2 vom Einschleusförderer 85 am Sortiereingang auf die Einlagerbahn 102 am Sortierausgang ohne Stillstand des Transportumlaufs gefördert werden können. Dadurch wird eine hohe Durchsatzleistung an der Kreissortiermaschine 76 erreicht.

Wie in Fig. 6 weiters ersichtlich, sind in jeder Gasse 110 zwei Regalförderfahrzeuge 103 angeordnet und jeweils zwei Einlagerbahnen 102 einander gegenüberliegend angeordnet, die mit ihrem einen Ende mit der Kreissortiermaschine 76 verbunden sind und mit ihrem anderen Ende aufeinander zulaufen.

Die Packeinheiten 2 werden auf die Einlagerbahnen 102 ausgeschleust und jeweils in Richtung zu den Bereitstellungsbahnen 113, 114 gefördert. Die Packeinheiten 2 werden in der Regel chaotisch zugeführt, daher sind die Packeinheiten 2 weder zu einem Kommissionierauftrag zusammengefasst, noch sind sie nach ihren Abmessungsklassen sortiert.

Wie oben beschrieben, werden die zu einem Kommissionierauftrag benötigten Packeinheiten 2 relativ zum Regalförderfahrzeug 103 in das links oder rechts davon aufgestellte Lagerregal 108, 109 zwischengelagert.

Der Einlagerung der Packeinheiten 2 in die Auftragskanäle 118 geht die Berechnung einer bezüglich der Stabilität, Volumenausnutzung und/oder Höhe und dgl. optimierten räumlichen (dreidimensionalen) Beladungskonfiguration der Packeinheiten 2 im Ladestapel auf dem Ausliefergebinde 15, beispielsweise Rollcontainer, Palette, voraus. Der Ladestapel ist möglichst stabil und transportfähig, wenn die schweren Packeinheiten 2 im unteren Teil des Ladestapels und die leichtere Packeinheiten 2 im oberen Teil des Ladestapels gelagert sind. Ebenso sind empfindlichere Packeinheiten 2 im oberen Teil des Ladestapels besser untergebracht. Der Ladestapel soll außerdem möglichst dicht gepackt und möglichst hoch sein, um das Ladevolumen in einem Ausliefer-Transportfahrzeug möglichst gut nutzen zu können.

Die Packeinheiten 2 sind über einen Identifizierungscode eindeutig identifizierbar und kann über die im Rechner in einer Datenbank gespeicherten Abmessungen die räumliche Beladungskonfiguration eines oder mehrerer Ladestapel auf der oder den Ausliefergebinden 15 ermittelt werden. Aus der Beladungskonfiguration wird eine Beladungsreihenfolge ermittelt, in welcher der Ladestapel auf dem Ausliefergebinde 15 aufgebaut wird. Die Packeinheiten 2 müssen demnach in einer durch die Beladungskonfiguration festgelegten Beladungsreihenfolge aufeinander folgend der ersten Beladestation 14, insbesondere einer automatischen Stapeleinrichtung zugeführt werden.

Die Beladungsreihenfolge wird in den nachfolgend beschriebenen Sortierstufen hergestellt.

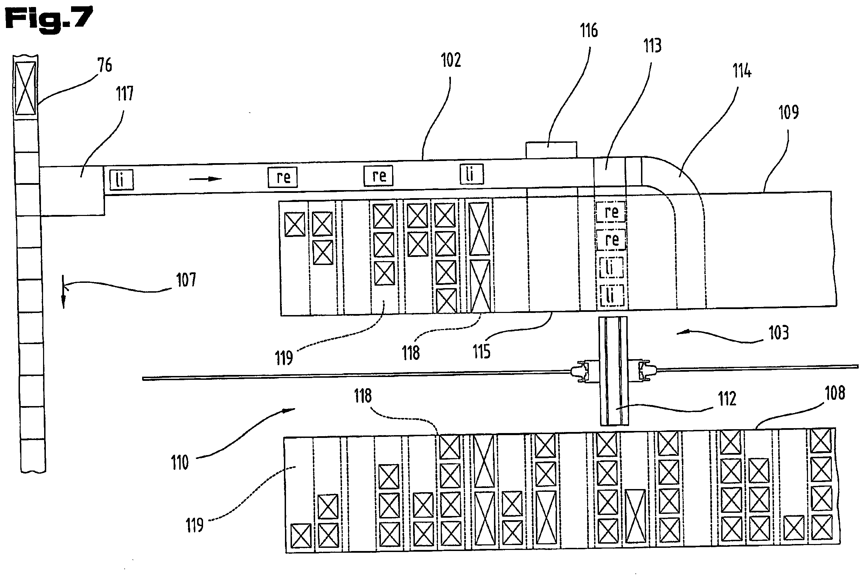

Die Vorsortierung der Packeinheiten 2 in der zweiten und dritten Sortierstufe wird anhand der Fig. 7 erläutert. Nachdem die einzelnen, auf der Einlagerbahn 102 angelieferten Packeinheiten 2 über eine Packeinheiten-Identifikationseinrichtung, beispielsweise ein Lesegerät 33 oder Bildverarbeitungssystem, das am Wareneingang 3 und/oder am Sortereingang und/oder Sorterausgang angeordnet sein kann, identifiziert und einem Kommissionierauftrag zugeordnet sind, werden diese nach einem vorgegebenen Sortierkriterium vor ihrer Einlagerung auf eine Lagerposition in einem Auftragskanal 118 entweder direkt auf eine der Bereitstellungsbahnen 113, 114 gefördert oder zuvor nach ihrer bevorstehenden Einlagerung auf eine Lagerposition in einem Auftragskanal 118, durch den Pufferbahnhof 115 sortiert gefördert. Die Lagerpositionen und Auftragskanäle 118 werden gemäß den Kommissionieraufträgen vor der Einlagerung der Packeinheiten 2 in die Auftragskanäle 118 durch den Rechner nach dem chaotischen Lagerungsprinzip festgelegt.

Die Vorsortierung wird somit an den Bereitstellungsbahnen 113, 114 und am Pufferbahnhof 115 vorgenommen. Die Lagerpositionen der Packeinheiten 2 werden vom Rechner nach dem Erfassen eines Kunden- bzw. Kommissionierauftrags definiert und einem oder mehreren Auftragskanälen 118 zugeordnet. Die Lagerposition der Packeinheiten 2 kann relativ zum Regalförderfahrzeug 102 entweder im linken oder rechten Lagerregal 108, 109 liegen.

Das Regalförderfahrzeug 103 kann auf der Lastaufnahmevorrichtung entweder vier Packeinheiten 2 der ersten Abmessungsklasse oder zwei Packeinheiten 2 der zweiten Abmessungsklasse oder zwei Packeinheiten 2 der ersten Abmessungsklasse und eine Packeinheit 2 der zweiten Abmessungsklasse aufnehmen.

Sollen mehr als zwei Packeinheiten 2 von der Lastaufnahmevorrichtung in Auftragskanäle 118 des linken und rechten Lagerregals 108, 109 eingelagert werden, müssen die Packeinheiten 2 in einer, für die bevorstehende Einlagerung in einem bereits festgelegten Auftragskanal 118 richtigen Reihenfolge auf der Lastaufnahmevorrichtung abgestellt sein. Mit anderen Worten müssen die Packeinheit(en) 2, die in einen oder mehrere Auftragskanäle 118 im linken Lagerregal 108 eingelagert werden müssen, auf der Lastaufnahmevorrichtung in Einlagerrichtung an linker Position liegen, während die Packeinheit(en) 2, die in einen oder mehrere Auftragskanäle 118 im rechten Lagerregal 109 eingelagert werden müssen, auf der Lastaufnahmevorrichtung in Einlagerrichtung an rechter Position bereitgestellt werden.

Damit diese Bereitstellungspositionen für die Packeinheiten 2 auf der Lastaufnahmevorrichtung gewährleistet sind, ist noch vor der Übernahme der Packeinheiten 2 auf die Lastaufnahmevorrichtung eine Vorsortierung der Packeinheiten 2 in Abhängigkeit der bevorstehenden Einlagerung in die Auftragskanäle 118 in das linke und rechte Lagerregal 108, 109 erforderlich, wenn die an der Einlagerbahn 102 angelieferten Packeinheiten 2 in einer für die bevorstehende Einlagerung in die Auftragskanäle 118 falschen Reihenfolge gefördert werden.

Die Vorsortierung soll anhand des nachfolgenden Beispiels erläutert werden, nach welchen vier Packeinheiten 2 der ersten Abmessungsklasse in falscher Reihenfolge gefördert werden.

Die Packeinheiten 2 wurden bereits identifiziert, Kommissionieraufträgen und einem oder mehreren Auftragskanälen 118 zugeordnet.

Die auf der, dem rechten Lagerregal 109 zugeordneten Einlagerbahn 102 angelieferte erste und letzte Packeinheit 2 müssen in einen oder mehreren Auftragskanälen 118 des linken Lagerregals 108 und die zweite und dritte Packeinheit 2 in einen oder mehreren Auftragskanälen 118 des rechten Lagerregals 109 eingelagert werden.

Die Vorsortierung wird in mehreren Schritten durchgeführt. Vorerst wird die erste Packeinheit 2 in die erste Bereitstellungsbahn 113 gefördert und währenddessen die in Förderrichtung nachfolgenden Packeinheiten 2 über den Ausschleuser 116 vorläufig auf den Pufferbahnhof 115 ausgeschleust. Die letzte Packeinheit 2 wird an den geparkten Packeinheiten 2 vorbeigefördert (überholen) und in die erste Bereitstellungsbahn 113 gefördert, ehe die im Pufferbahnhof 115 geparkten Packeinheiten 2 wiederum in die Einlagerbahn 102 zurückgeschleust und zur ersten Bereitstellungsbahn 113 gefördert werden.

Die Packeinheiten 2 können nun in dieser, in strichpunktierte Linien eingetragenen Reihenfolge von der Lastaufnahmevorrichtung übernommen und zu den Lagerpositionen in den Auftragskanälen 118 im linken und rechten Lagerregal 108, 109 gefördert werden.

Sollen hingegen in einem anderen Beispiel Packeinheiten 2 der zweiten Abmessungsklasse in Auftragskanäle 118 eingelagert werden, wird die in Förderrichtung erste Packeinheit 2, die in einen Auftragskanal 118 im rechten Lagerregal 109 gefördert werden muss, vorerst über den Ausschleuser 116 auf den Pufferbahnhof 115 ausgeschleust. Die in Förderrichtung zweite Packeinheit 2, die in einen Auftragskanal 118 im linke Lagerregal 109 gefördert werden muss, wird an der geparkten Packeinheit 2 vorbeibewegt und in die zweite Bereitstellungsbahn 114 gefördert, ehe die geparkte Packeinheit 2 aus dem Pufferbahnhof 115 zurückgeschleust und zur zweiten Bereitstellungsbahn 113 gefördert wird.

Die auf der Lastaufnahmevorrichtung aufgenommenen Packeinheiten 2 können einem bis vier Kommissionieraufträgen angehören. Sind die vier Packeinheiten 2 zu einem Kommissionierauftrag bestimmt, werden diese in einen einzigen Auftragskanal 118 eingelagert. Sind hingegen die Packeinheiten 2 jeweils zu einem Kommissionierauftrag zugeordnet, muss die Lastaufnahmevorrichtung vier Auftragskanäle 118 anfahren und in jedem der Auftragskanäle 118 eine einzelne Packeinheit 2 einlagern. Ein Kommissionierauftrag kann eine Vielzahl von Packeinheiten 2 umfassen, in Folge dessen mehrere Auftragskanäle 118 mit Packeinheiten 2 belegt werden müssen. Die Zuordnung der Auftragskanäle 118 zu einem Kommissionierauftrag kann nach dem chaotischen Lagerungsprinzip erfolgen.

Mit dieser Maßnahme wird eine Leistungssteigerung des Packeinheiten-Verteilsystems, insbesondere des Regelförderfahrzeuges 103, erreicht, da gegenüber den aus dem Stand der Technik bekannten Systemen eine Umlagerung von Packeinheiten 2 über das Regalförderfahrzeug 102 zwischen Lagerkanälen 111 entfallen kann, um Auftragskanäle 118 zu bilden. Entgegen dem Stand der Technik werden bei der hier vorliegenden Maßnahme auf das Regalförderfahrzeug 103 bereits in der zur Einlagerung in die Auftragskanäle 118 im linken und rechten Lagerregal 108, 109 erforderlichen Bereitstellungsposition übernommen. Die Reihenfolgebildung wird entkoppelt vom Regelförderfahrzeug 103, noch auf der Einlagerbahn 102 durchgeführt. Das Regalförderfahrzeug 103 kann zu einem oder mehreren Kommissionieraufträgen eine Verteilung der Packeinheiten 2 auf die Lagerpositionen vornehmen und währenddessen die nächsten Packeinheiten 2 vorsortieren.

Wie in Fig. 7 eingetragen, werden vom Rechner auch eine oder mehrere, so genannte Überlaufkanäle 119 festgelegt. Diese Überlaufkanäle 119 beinhalten jene Packeinheiten 2, die zwar identifiziert, aber nicht einem Kommissionierauftrag zugeordnet sind. Wie oben beschrieben, werden die Packeinheiten 2 von den Vorratseinheiten 5 gemäß einem Kommissionierauftrag vorzugsweise lagenweise depalettiert. Da eine Stapellage mehr Packeinheiten 2 enthalten kann, als für einen Kommissionierauftrag benötigt werden, werden diese ebenso nach ihrer Vereinzelung auf die Kreissortiermaschine 76 und danach über die Einlagerbahn 102 auf die Bereitstellungsbahnen 113, 114 gefördert. Die "überschüssigen" Packeinheiten 2 werden von der Lastaufnahmevorrichtung übernommen und bereits bestehende Überlaufkanäle 119 aufgefüllt oder neue Überlaufkanäle 119 vom Rechner, insbesondere Lagerverwaltungsrechner, festgelegt und in diesen eingelagert.

In diesen Überlaufkanälen 119 sind unterschiedliche Packeinheiten 2 eingelagert und vergleicht nach einem ersten Ausführungsbeispiel der Rechner nach Vorliegen eines Kommissionierauftrages, ob in einem der Überlaufkanäle 119, zumindest eine oder mehrere zu diesem Kommissionierauftrag benötigte Packeinheit(en) 2 oder ein gesamter Auftrag eingelagert sind. Ist dies der Fall, werden die im Überlaufkanal 119 eingelagerte(n) Packeinheit(en) zu einem Kommissionierauftrag zugeordnet und der Überlaufkanal 119 vom Rechner als Auftragskanal 118 festgelegt.

In einem anderen Ausführungsbeispiel - wie in strichlierte Linien in den Fig. 6, 8 und 9 eingetragen - werden die Packeinheiten 2 aus den Überlaufkanälen 119 durch die Regalförderfahrzeuge 103 ausgelagert und durch die Auslagerbahnen 121 der Sortierfördereinrichtung 104 angeliefert. Dort angekommen, werden die Packeinheiten 2 durch eine Fördervorrichtung (nicht dargestellt) auf einer Plattform 123 der Sortierfördereinrichtung 104 auf eine der Überlaufbahnen 124 übergeben und von dieser neuerlich zur Kreissortiermaschine 76 gefördert. Danach durchlaufen die Packeinheiten 2 die erste bis dritte Sortierstufe, wie oben beschrieben. Die neuerliche Rückführung der Packeinheiten 2 zur Kreissortiermaschine 76 kann aber auch dann notwendig sein, wenn ein Kommissionierauftrag abgebrochen wird.

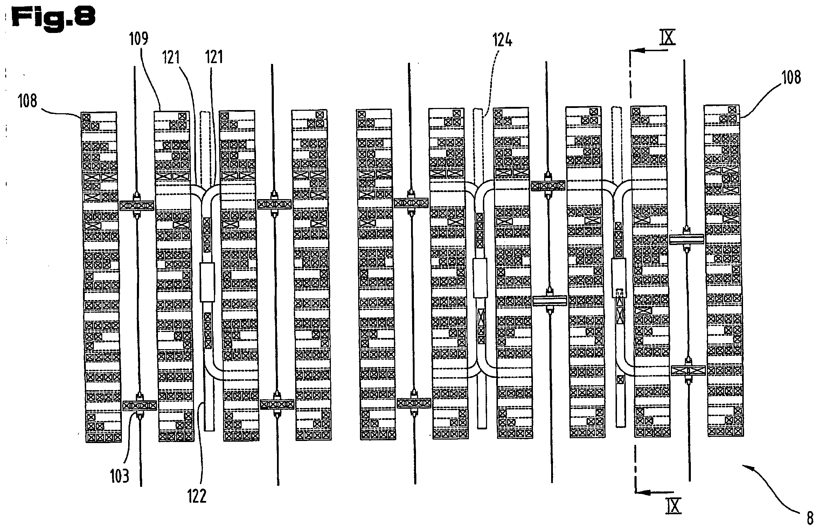

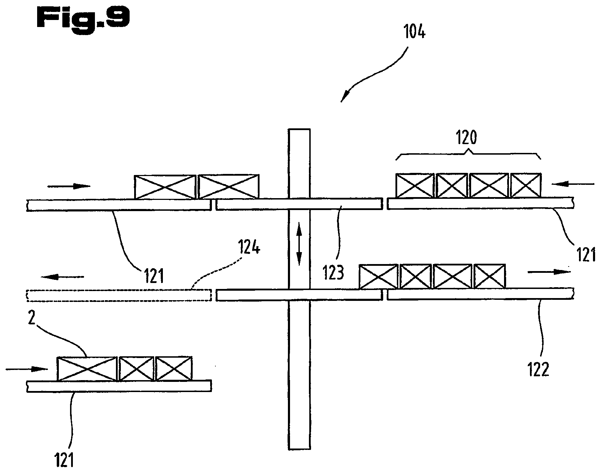

In der, in den Fig. 8 und 9 beschriebenen, vierten Sortierstufe, werden die zu einem Kommissionierauftrag in einem oder mehreren Auftragskanälen 118 eingelagerten Packeinheiten 2 durch das Regelförderfahrzeug 103 bzw. die Lastaufnahmevorrichtung als Packeinheitengruppen 120 ausgelagert und nach, vom Rechner vorgegebenen Sortierkriterien in eine definierte Reihenfolge sortiert. Das Sortierkriterium ist wie bei der Einlagerung durch die räumliche Beladungskonfiguration im Ladestapel auf dem ersten Ausliefergebinde 15 bestimmt und wird daraus die Beladungsreihenfolge ermittelt. Die Packeinheitengruppen 120 werden einer Sortierfördereinrichtung 104, insbesondere einem Sortierheber, zugeführt und von dieser entsprechend der festgelegten Reihenfolge und Beladungskonfiguration sortiert.

Wie aus Fig. 9 ersichtlich, ist die Sortierfördereinrichtung 104 über Auslagerbahnen 121 mit zwei Gassen 110 bzw. mehr als einem, bevorzugt drei Regelförderfahrzeugen 103 verbunden, welche die zu einem Kommissionierauftrag in den Auftragskanälen 118 zusammengestellten Packeinheitengruppen 120 auslagern. Jedem Regalförderfahrzeug 103 ist eine Auslagerbahn 121 zugeordnet. Die Packeinheitengruppen 120 werden sodann über die Auslagerbahnen 121 zur Sortierfördereinrichtung 104 gefördert.

Die Sortierfördereinrichtung 104 weist einen Sortierheber auf, welcher die in der oberen Ebene vom ersten und zweiten Regalförderfahrzeug 103 zur Sortierfördereinrichtung 104 zulaufenden Auslagerbahnen 121 und die in der unteren Ebene vom dritten Regalförderfahrzeug 103 auf die Sortierfördereinrichtung 104 zulaufende Auslagerbahn 121 und eine zur ersten Beladestation 14 wegführende Beschickungsförderbahn 122 miteinander verbindet. Der Sortierheber umfasst zumindest eine heb- und senkbare Plattform 123, auf der eine Fördervorrichtung (nicht dargestellt), beispielsweise ein Bandförderer, Rollenförderer und dgl. gelagert ist. In einer vorteilhaften Ausführung weist der Sortierheber mehrere gemeinsam heb- und senkbare Plattformen 123 mit darauf angeordneten Fördervorrichtungen auf.

Die Packeinheitengruppen 120 werden von dem/den Regelförderfahrzeug(en) 103 ausgelagert, wenn die Leistungskennzahl einen Sollwert unterschreitet, daher das/die Regelförderfahrzeug(e) noch nicht ihre maximale Auslastung erreicht hat/haben. Durch die Entkoppelung des Sortiervorganges und Auslagervorganges wird eine Leistungssteigerung an den Regelförderfahrzeugen 103 und eine verbesserte Durchsatzleistung erreicht. Die Packeinheitengruppen 120, die beispielsweise jeweils bis zu vier einzelne Packeinheiten 2 enthalten, werden auf den Auslagerbahnen 121 in beliebiger Reihenfolge zur Sortierfördereinrichtung 104 gefördert. Dort angekommen, werden die Packeinheitengruppen 120 vom Sortierheber nacheinander nach dem Sortierkriterium der die Beladungskonfiguration ermöglichenden Beladungsreihenfolge übernommen und in dieser Reihenfolge auf die Beschickungsförderbahn 122 übergeben.

Weist der Sortierheber zwei Plattformen 123 bzw. Fördervorrichtungen auf, können gleichzeitig eine Packeinheitengruppe 120 von der Auslagerbahn 121 auf die erste Plattform 123 übergeben und eine andere Packeinheitengruppe 120 von der zweiten Plattform 123 auf die Beschickungsförderbahn 122 abgefördert werden. Dadurch wird die Durchsatzleistung am Sortierheber wesentlich angehoben.

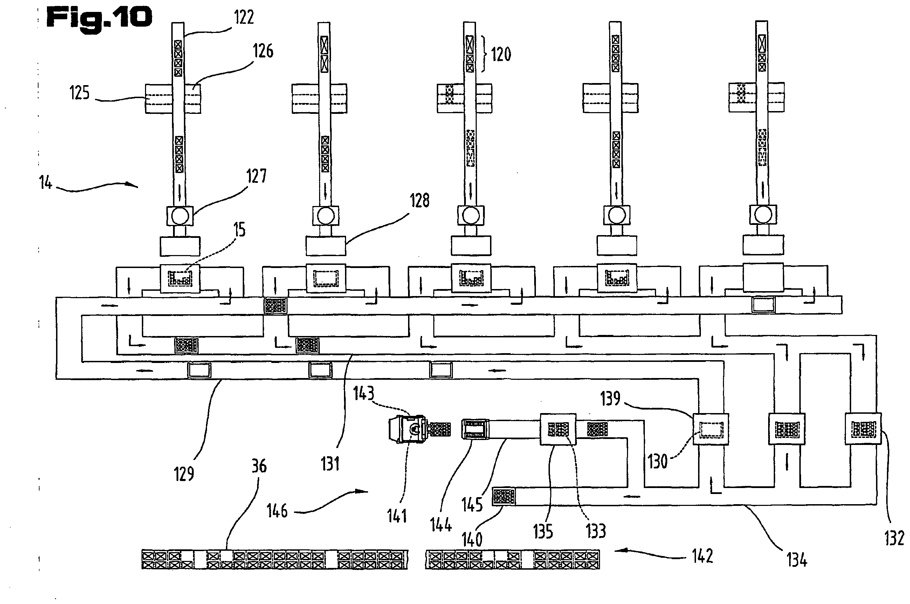

Die in die richtige Reihenfolge sortierten Packeinheitengruppen 120 werden über die Beschickungsförderbahn 122 zur fünften Sortierstufe (Fig. 10) und danach zur ersten Beladestation 14, insbesondere zu einer automatischen Stapeleinrichtung gefördert. Die Beladestation 14 kann auch mehrere, automatische Stapeleinrichtungen 128 aufweisen.

Umfasst der Kommissionierauftrag beispielsweise drei Packeinheitengruppen 120 und soll der Ladestapel möglichst stabil sein, so enthält die in Förderrichtung - gemäß eingetragenem Pfeil - erste Packeinheitengruppe 120 die Packeinheiten 2 der schwersten Gewichtsklasse, die zweite Packeinheitengruppe 120 die Packeinheiten 2 der mittleren Gewichtsklasse und die dritte Packeinheitengruppe 120 die Packeinheiten 2 der leichten Gewichtsklasse. Eine Endsortierung in der fünften Sortierstufe ist beispielsweise erforderlich, wenn die in Förderrichtung - gemäß eingetragenem Pfeil - hinterste Packeinheit 2 das größte Gewicht aufweist, aber noch in eine untere Stapellage gestapelt werden muss, während die in Förderrichtung - gemäß eingetragenem Pfeil - voran gereihten Packeinheiten 2 bereits in die darüber liegende Stapellage gestapelt werden. Dadurch kann ein besonders stabiler Ladestapel hergestellt werden. Ebenso kann diese Sortierung im Hinblick auf Volumenausnutzung, Zerbrechlichkeit, Höhe des Ladestapels und dgl. endsortiert werden.

In der fünften Sortierstufe wird also innerhalb einer jeden Packeinheitengruppe 120 erforderlichenfalls eine Sortierung nach, vom Rechner, insbesondere Lagerverwaltungsrechner, vorgegebenen Sortierkriterien durchgeführt. Hierzu ist eine Sortiereinrichtung vorgesehen, die einen Pufferbahnhof 125 und eine Ausschleuser 126 aufweist. Der Pufferbahnhof 125 weist einen nicht dargestellten Einschleuser auf, der beispielsweise durch einen Band- oder Riemenförderer und dgl. gebildet ist. Ein- und Ausschleuser können auch eine Einheit bilden. Die Sortiereinrichtung, insbesondere der Ein- und Ausschleuser werden vom Rechner (Steuerung) angesteuert, wenn eine Packeinheit 2 von der Beschickungsförderbahn 122 in den Pufferbahnhof 125 auszuschleusen oder aus dem Pufferbahnhof 125 wieder auf die Beschickungsförderbahn 122 einzuschleusen ist.

Werden die Packeinheiten 2 innerhalb einer jeden Packeinheitengruppe 120 in der aus der Beladungskonfiguration ermittelten richtigen Reihenfolge gefördert, passieren diese die fünfte Sortierstufe und werden direkt der ersten Beladestation 14 zugeführt.

Werden hingegen innerhalb einer Packeinheitengruppe 120 die Packeinheiten 2 in einer durch die Beladungskonfiguration festgelegten, falschen Reihenfolge angeliefert, werden die Packeinheiten 2 innerhalb dieser Packeinheitengruppe 120 endsortiert. Muss beispielsweise in der ersten Packeinheitengruppe 120 die in Förderrichtung - gemäß eingetragenem Pfeil - hinterste Packeinheit 2 an erste Stelle vorgereiht werden, werden die in Förderrichtung - gemäß eingetragenem Pfeil - vordersten zwei Packeinheiten 2 über den Ausschleuser 126 von der Beschickungsförderbahn 122 auf den Pufferbahnhof 125 ausgeschleust, sodass die dritte Packeinheit 2 an den "geparkten" Packeinheiten 2 vorbeigefördert werden kann, ehe die "geparkten" Packeinheiten 2 über den Einschleuser wieder auf die Beschickungsförderbahn 122 eingeschleust und der nunmehr an erster Stelle vorangereihten Packeinheit 2 nachgereiht werden, wie in strichlierte Linien an der mittleren Beschickungsförderbahn 122 dargestellt. Durch diese Sortierung kann eine endgültige Reihenfolge, in der die Packeinheiten 2 auf dem ersten Ausliefergebinde 15 gestapelt werden, hergestellt werden.

Kurz vor der ersten Beladestation 14 können die Packeinheiten 2 gegebenenfalls noch an einer Drehvorrichtung 127 nachgedreht werden, um die vorberechnete Beladungskonfiguration im Ladestapel abbilden zu können.

Die der ersten Beladestation 14 in der richtigen Reihenfolge und Ausrichtung zugeführten vereinzelten Packeinheiten 2 werden bevorzugt durch die automatische erste Stapeleinrichtung 128 auf das erste Ausliefergebinde 15 gestapelt. Eine solche Stapeleinrichtung 128 ist in der österreichischen Patentanmeldung A 127/2008 der gleichen Anmelderin beschrieben und wird zum Gegenstand dieser Offenbarung gemacht.

Wie in Fig. 10 ersichtlich, sind mehrere erste Stapeleinrichtungen 128 vorgesehen, die jeweils eine Ausliefergebinde-Wechseleinrichtung aufweisen, die an eine Födereinrichtung 129 zum Antransport leerer Auslieferungsgebinde 15 und einer darauf angeordneten Ladehilfe 130 und eine Födereinrichtung 131 zum Abtransport von beladenen Ausliefergebinden 15 anschließt. Die Ladehilfe 130 umgibt den sich bildenden Ladestapel von drei Seiten und dient als Abstützfläche für eine Schiebebewegung der Packeinheiten 2 in Horizontalrichtung beim Stapeln.

Sobald ein Ausliefergebinde 15 mit einem Ladestapel vollständig beladen ist, tauscht die Ausliefergebinde-Wechseleinrichtung, die nach diesem Ausführungsbeispiel einen antreibbaren Rollenförderer aufweist, das beladene Ausliefergebinde 15 durch ein leeres Ausliefergebinde 15 mit einer darauf angeordneten Ladehilfe 130 aus. Das beladene Ausliefergebinde 15 wird gemeinsam mit der Ladehilfe 130 durch die Födereinrichtung 131 zu einer Wickelstation 132 gefördert, in der das beladene Ausliefergebinde 15 relativ zur Ladehilfe 130 nach oben oder unten bewegt wird und gleichzeitig eine freigelegte Stapellage mit einer Folie zur Stabilisierung des Ladestapels umwickelt wird.

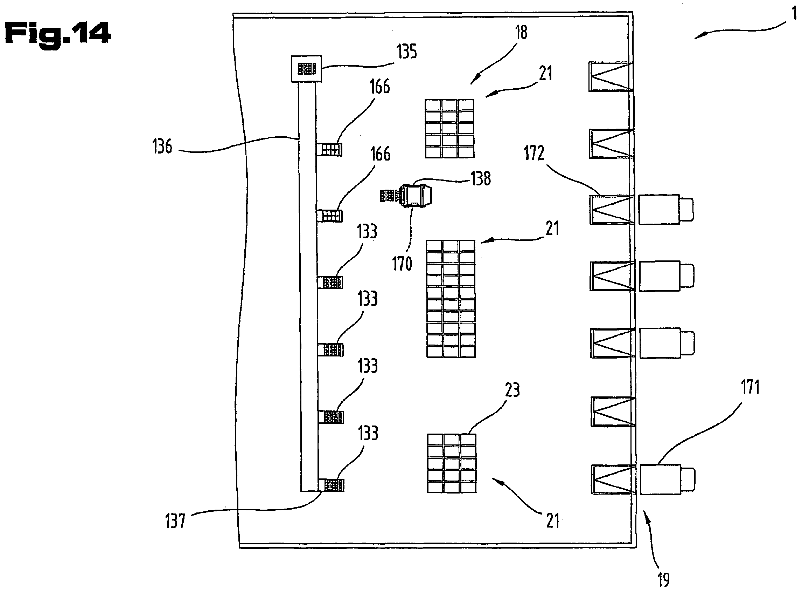

Wie in den Fig. 14 ersichtlich, werden die umwickelten Ladestapel auf den ersten Ausliefergebinden 15 als versandfertige Liefereinheiten 133 von einer Fördereinrichtung 134 über eine Hebevorrichtung 135 auf die Anliefer- und Versandebene abgesenkt und über die Auslagerbahn 136 zu Abgabestationen 137 gefördert. Dort angekommen, werden sie von einer Konsolidierungsperson vorzugsweise mittels eines Gabelstaplers 138 abgeholt und zu den Stellplätzen 23 in den Ausgangspufferzonen 21 transportiert und dort in der durch den Rechner gemäß einem Kundenauftrag festgelegten Auslieferreihenfolge abgestellt.

Die leeren Ladehilfen 130 werden ebenfalls durch die Födereinrichtung 134 von der Wickelstation 132 zu einer Nachrüstvorrichtung 139 gefördert, wo die Ladehilfe 130 mit einem Ausliefergebinde 15 versehen wird und dann wieder über die Födereinrichtung 129 einer der Stapeleinrichtungen 128 zugeführt wird.

Andererseits ist es auch möglich, dass auf den umwickelten Ladestapel noch Packeinheiten 2 einer dritten Klassifikationsgruppe, insbesondere Sperrigteile geladen werden müssen, wozu die "teilfertige" Liefereinheit 133 von der Födereinrichtung 134 zu einer Abgabestation 140 gefördert und dort ein Lagerarbeiter 141 die noch fehlenden Sperrigteile auflädt.

Die Sperrigteile werden im äußeren Lagebereich 142 des Eingangslagers 4 zwischengelagert. Die "teilfertige" Liefereinheit 133 ist mit einem Datenträger (nicht dargestellt), insbesondere einem Barcode, versehen und kann durch Auslesen der darin enthaltenen Daten diese Liefereinheit 133 identifiziert und dem Lagerarbeiter 141 auf einer Ein- und/oder Ausgabevorrichtung 143 angezeigt werden, welcher oder welche Sperrigteil(e) auf die "teilfertige" Liefereinheit 133 noch in einer dritten Beladestation 146 kommissioniert werden müssen. Die Beladestation 146 umfasst die Abgabe- und Aufgabestation 140, 144. Hat der Lagerarbeiter 141 die noch fehlenden Sperrigteile gemäß einem Kommissionierauftrag kommissioniert, wird über die Ein- und/oder Ausgabevorrichtung 142 das Ende des Kommissioniervorganges bestätigt. Die Sperrigteile werden vom Lagerarbeiter 141 über einen Verteilwagen direkt aus dem Lagerbereich 142 für die Sperrigteile im Eingangslager 4 entnommen.

Die fertig beladenen Liefereinheiten 133 werden sodann an einer Aufgabestation 144 abgestellt und durch eine Födereinrichtung 145 zu der Hebevorrichtung 135 gefördert und von dieser auf die Anliefer- und Versandebene abgesenkt, wo sie durch die Auslagerbahn 136 zu den Abgabestationen 137 gefördert, von einer Konsolidierungsperson entnommen und entsprechend der Auslieferreihenfolge auf die Stellplätze 23 gebracht werden.

Natürlich können in der dritten Beladestation 146 die Packeinheiten 2 der dritten Klassifikationsgruppe, insbesondere Sperrigteile, gemäß einem Kommissionierauftrag auch auf ein drittes, leeres Ausliefergebinde geladen werden, das nach der Ladungssicherung des Ladestapels als versandfertige Liefereinheit zu einer der Abgabestationen 137 (Fig. 14) gefördert wird, wie nicht näher dargestellt.

Im nachfolgenden wird der Förderfluss der Packeinheiten 2 einer zweiten Klassifikationsgruppe anhand der Fig. 3, 4 und 11 beschrieben.

Wie in Fig. 3 ersichtlich, weist das Vorratseinheiten-Verteilsystem in der Umlagerebene einen entlang einer Fördertechnik 63 verfahrbaren Verteilwagen 98 sowie eine Ausschleusbahn 64 und eine Einschleusbahn 65 auf. Die Fördertechnik 63 ist an die Förderbahnen 52 angeschlossen. Die Aus- und Einschleusbahnen 64, 65 sind mit ihrem einen Ende an die Fördertechnik 63 angeschlossen und an ihrem anderen Ende durch eine Förderbahn 66 miteinander verbunden. An die Förderbahn 66 ist eine Stapelvorrichtung 67 angeschlossen.

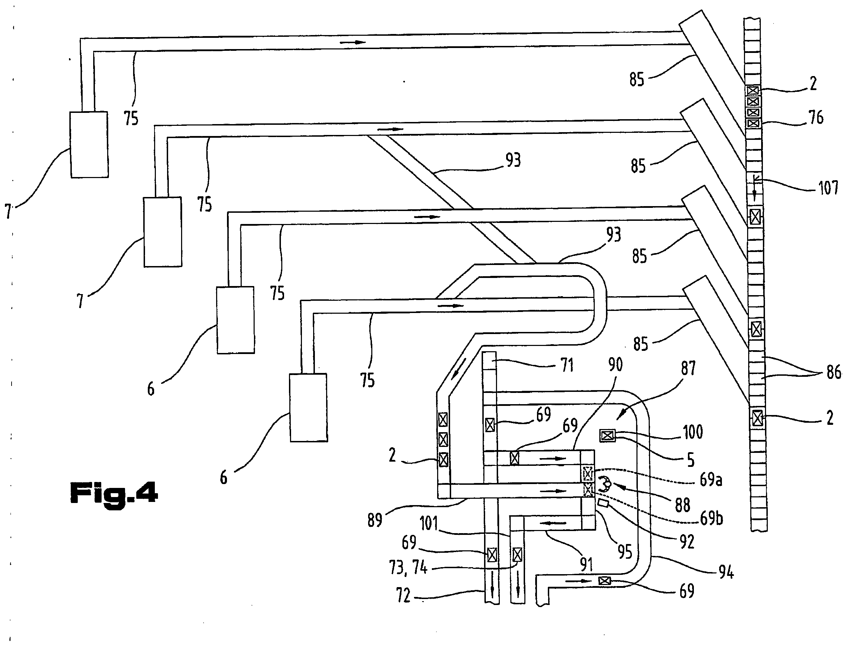

Zusätzlich ist in der Umlagerebene eine Handhabungseinrichtung 68 für Ladungsträger 69, beispielsweise Roboter, eine Förderbahn 70 sowie eine Hebevorrichtung 71 vorgesehen. Die Hebevorrichtung 71 verbindet die Förderbahn 70 mit einer Förderbahn 72 (Fig. 4) in der dritten Ebene.

Das Lagersystem 1 weist in der dritten Ebene (Fig. 4) zumindest eine Packstation 87 auf, die an das Vorratseinheiten-Verteilsystem und Packeinheiten-Verteilsystem anschließt. An dieser Packstation 87 können Packeinheiten 2 der zweiten Klassifikationsgruppe einer ersten oder zweiten Gewichtsklasse (erste und zweite Klassifikationsuntergruppe) und/oder Abmessungsklasse und dgl. manipuliert werden.

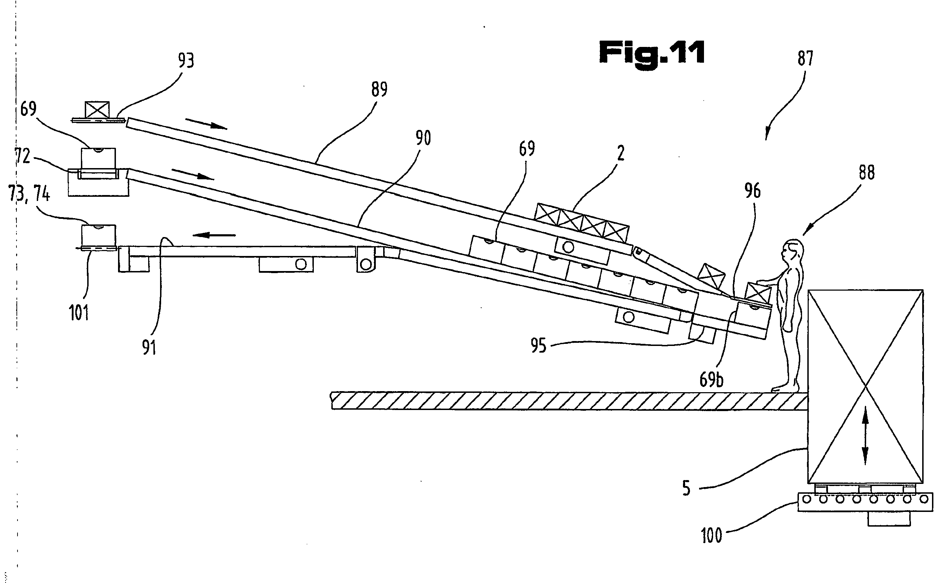

Wie aus der Zusammenschau der Fig. 4 und 11 ersichtlich, umfasst die Packstation 87 eine in Richtung zu einem Lagerarbeiter 88 geneigt nach unten verlaufende Bereitstellungsbahn 89 für Packeinheiten 2 einer zweiten Gewichtsklasse und/oder Abmessungsklasse und dgl., eine in Richtung zum Lagerarbeiter 88 geneigt nach unten verlaufende Bereitstellungsbahn 90 für leere Ladungsträger 69, eine Einschleusbahn 91 für beladene Ladungsträger 69 bzw. Versand- und Versorgungsträger 73, 74. Die Bereitstellungsbahn 90 für leere Ladungsträger 69 und die Einschleusbahn 91 sind mit einer unterhalb der Bereitstellungsbahn 89 für Packeinheiten 2 verlaufenden Förderbahn 95 miteinander verbunden. Die Bereitstellungsbahn 89 für die Packeinheiten 2 ist an eine Förderbahn 93 des Packeinheiten-Verteilsystems angeschlossen, wobei die Förderbahn 93 von den Vereinzelungsbahnen 75 abzweigt. Für die Anlieferung von leeren Ladungsträgern 69 ist die Bereitstellungsbahn 90 an eine Förderbahn 72 angeschlossen, zu der auch eine, durch die Kommissionierung im zweiten Zwischenlager 9 entstehenden leeren Versorgungsträger 74 befördernde Förderbahn 94 führt. Zusätzlich ist die Packstation 87 mit einer Ein- und/oder Ausgabevorrichtung 92 ausgestattet. Genauso gut können auch mehrere Packstationen 87 vorgesehen werden.

Wie in den Fig. 4 und 11 ersichtlich, ist die Packstation 87 auch an das Vorratseinheiten-Verteilsystem angeschlossen, das durch die Hebevorrichtung 100 Packeinheiten 2 einer ersten Gewichtsklasse und/oder Abmessungsklasse und dgl., auf der Vorratseinheit 5 bereitstellt.

Liegt ein erster Nachschubauftrag vor, wird zumindest eine Vorratseinheit 5 mit Packeinheiten 2 einer ersten Gewichtsklasse und/oder Abmessungsklasse und dgl., vom Regalförderfahrzeug 43 ausgelagert und über die Auslagerbahn 51 und gegebenenfalls Verbindungsbahn 55 auf die linke Förderbahn 52 gefördert. Dort angekommen, wird die Vorratseinheit 5 vom Verteilwagen 98 übernommen und von diesem auf die Ausschleusbahn 64 bis zur Hebevorrichtung 100 gefördert. Die Hebevorrichtung 100 übernimmt die Vorratseinheit 5 mit den Packeinheiten 2 der ersten Gewichtsklasse und hebt diese in die dritte Ebene bis in eine vorbestimmte Andienungshöhe an, in welcher der Lagerarbeiter 88 unter ergonomischen Gesichtspunkten die Packeinheiten 2 greifen kann und in zumindest einen leeren Ladungsträger 69 laden kann. Zuvor wird der leere Ladungsträger 69a von der Bereitstellungsbahn 90 auf die Förderbahn 95 gefördert und in einer eingetragenen Befüllposition bereitgestellt.

Wurden die benötigten Packeinheiten 2 umgepackt, wird dies an der Ein- und/oder Ausgabevorrichtung 92 quittiert und die Vorratseinheit 5 durch die Hebevorrichtung 100 auf die Ausschleusbahn 64 abgesenkt. Der befüllte Ladungsträger 69 wird als Versand- oder Versorgungsträger 73, 74 von der Förderbahn 95 über die Einschleusbahn 91 auf eine die Packstation 87 und das zweite Zwischenlager 9 verbindende Anlieferförderbahn 101 eines Ladungsträger-Verteilsystems gefördert.

Befinden sich auf dem Anliefergebinde 32 noch Packeinheiten 2 wird die "angebrochene" Vorratseinheit 5 über die Förderbahn 66 zur Einschleusbahn 65 gefördert und auf den Verteilwagen 98 übergeben. Dieser fährt mit der "angebrochene" Vorratseinheit 5 zur rechten Förderbahn 52 und übergibt diese auf die Förderbahn 52. Danach wird sie über die Einlagerbahn 50 und gegebenenfalls Verbindungsbahn 55 zum Regalförderfahrzeug 43 gefördert, welches die "angebrochene" Vorratseinheit wieder in das Eingangslager 4 einlagert.

Sind hingegen vom Anliefergebinde 32 alle Packeinheiten 2 entnommen worden, wird das leere Anliefergebinde 32 durch die Hebevorrichtung 100 auf die Ausschleusbahn 64 abgesenkt. Danach wird das leere Anliefergebinde 32 durch die Förderbahn 66 zur Stapelvorrichtung 67 gefördert und von dieser übereinander gestapelt. Die Stapel werden, wenn sie eine bestimmte Höhe erreicht haben, über die Einschleusbahn 65 zum Verteilwagen 98 gefördert, der ihn an die rechte Förderbahn 52 übergibt. Danach wird der Stapel über Teilabschnitte der Förderumlaufbahnen 48 zur Sortiereinrichtung 59 gefördert, wo die unterschiedlichen Typen von Anliefergebinden 32 sortenrein sortiert und an den Sammelstationen 60 sortenrein gestapelt werden.

Liegt ein zweiter Nachschubauftrag vor, werden die Packeinheiten 2 der zweiten Gewichtsklasse und/oder Abmessungsklasse und dgl., über die Förderbahnen 93 zur Packstationen 87 auf die Bereitstellungsbahn 89 in eine in Fig. 11 eingezeichnete Entnahmeposition gefördert, in welcher die Packeinheit 2 auf einer Abstützplatte 96 auflastet. Zuvor wird zumindest ein leerer Ladungsträger 69b von der Bereitstellungsbahn 90 auf die Förderbahn 95 gefördert und in einer eingetragenen Befüllposition unterhalb der Entnahmeposition bereitgestellt. Die Abstützplatte 96 wird gemeinsam mit der Packeinheit 2 bis oberhalb eines zu befüllenden Ladungsträgers 69b bewegt. Auf der Rückbewegung der Abstützplatte 96 und durch Zurückhalten der Packeinheit 2 in der Entnahmeposition, wird der Packeinheit 2 die Unterlage weggezogen und fällt die Packeinheit 2 in den Ladungsträger 69.

Der befüllte Ladungsträger 69b wird als Versandträger 73 von der Förderbahn 95 über die Einschleusbahn 91 auf eine die Packstation 87 und das zweite Zwischenlager 9 verbindende Anlieferförderbahn 101 eines Ladungsträger-Verteilsystems gefördert.

Das in den gemeinsam beschriebenen Fig. 3, 12 und 13 gezeigte, automatisierte Ladungsträger-Verteilsystem für Packeinheiten 2 der zweiten Klassifikationsgruppe, umfasst in mehreren Förderabschnitten die Förderbahnen 70, 72, eine Förderumlaufbahn 147, eine an letztere angeschlossene Anlieferförderbahn 101 für die Anlieferung der Versand- und Versorgungsträger 73, 74 zum zweiten Zwischenlager 9 und eine an die Förderumlaufbahn 147 angeschlossene Förderbahn 94 für den Rücktransport von leeren Ladungsträgern 69 zur Packstation 87 und der Anlieferung der Versandträger 73 in den Auftragspuffer 13 sowie die im zweiten Zwischenlager 9 angeordneten, rechnergesteuerten Regalförderfahrzeuge 148.

Das zweite Zwischenlager 9 weist parallel angeordnete Lagerregale 149 auf, in denen die Versand- und Versorgungsträger 73, 74 in doppelt tiefen Lagerkanälen 150 gelagert sind. Zwischen den Lagerregalen 149 sind Gassen 151 ausgebildet, in denen die Regalförderfahrzeuge 148 verfahrbar sind. Die Regalförderfahrzeuge 148 sind wiederum mit einer heb- und senkbaren Plattform 152 und mit einer darauf angeordneten Lastaufnahmevorrichtung (nicht dargestellt) ausgestattet, mittels welcher die Versand- und Versorgungsträger 73, 74 ein- und ausgelagert werden können. Die Gassen 151 sind an ihren stirnseitigen Enden jeweils mit einer Einlagerbahn 153 und Auslagerbahn 154 versehen, mittels welcher Versand- und Versorgungsträger 73, 74 einerseits angeliefert und auf ein Regalförderfahrzeug 148 übergeben und andererseits Versand- und Versorgungsträger 73, 74 vom Regalförderfahrzeug 148 auf die Auslagerbahn 154 abgegeben werden können.

Die jeweils benachbarten Lagerregale 149 sind mit Abstand angeordnet, um hierzwischen Kommissioniergänge 155 zu schaffen, innerhalb der jeweils zumindest ein oder mehrere Kommissionierplätze 156 vorgesehen sind. Innerhalb des Kommissionierganges 155 bewegen sich Kommissionierpersonen 157 auf einem Boden.

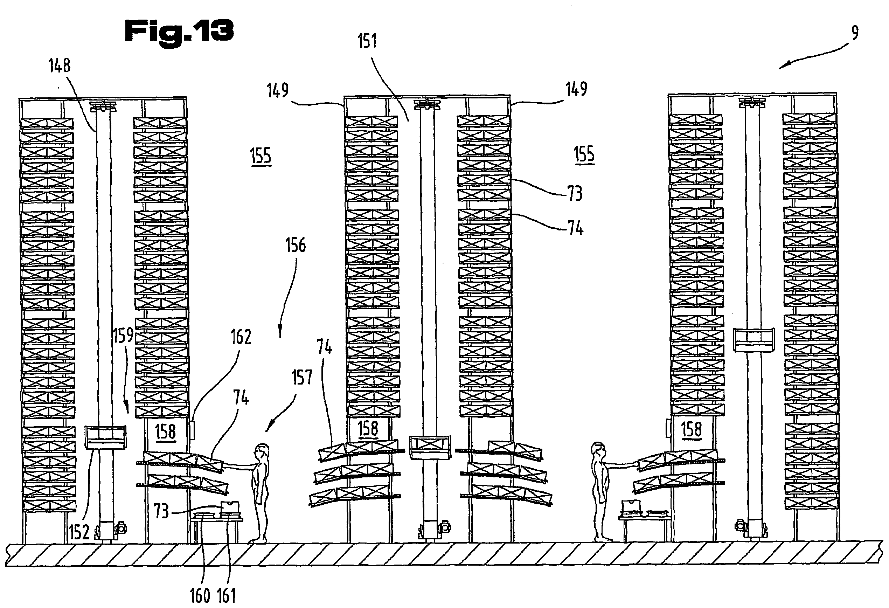

Im Bereich der Kommissionierplätze 156 ist eine Vielzahl von Durchlaufkanälen 158 ausgebildet und zwar gemäß der Darstellung in Fig. 13 auf der rechten Seite beispielsweise drei Ebenen übereinander und auf der linken Seite beispielsweise zwei Ebenen übereinander. Bevorzugt sind die Durchlaufkanäle 158 über die gesamte Länge des Lagerregals 149 angeordnet. Die Durchlaufkanäle 158 weisen jeweils eine zum Kommissionierplatz 156 hin geneigte Transporteinrichtung (Rollenbahn), einen zum jeweiligen Regalförderfahrzeug 148 hin offenen Übergabebereich 159 sowie am kommissionierplatzseitigen Ende eine Entnahmeposition auf. Die Länge einer jeden Rollenbahn ist so ausgebildet, dass sie vorzugsweise hintereinander drei Versorgungsträger 74 aufnehmen kann. Die mittels der Lastaumahmevorrichtung aus den Lagerregalen 149 ausgelagerten Versorgungsträger 74 werden von dem jeweiligen Regalförderfahrzeug 148 den Übergabebereichen 159 der Durchlaufkanäle 158 zugeführt und bewegen sich von hier aufgrund der Schwerkraft über die Rollenbahnen in ihre jeweilige Entnahmeposition bzw., falls diese bereits besetzt ist, in die hieran anschließende, mittlere Position oder, falls auch diese bereits besetzt ist, in die hinterste Position. Innerhalb eines Durchlaufkanals 158 werden die Artikel sortenrein in den Vorratsträgem 74 bereitgestellt.

In jedem Kommissioniergang 155 ist eine Förderbahn 160 angeordnet, die mittels ihrer Enden mit der Förderumlaufbahn 147 verbunden ist und parallel zum Lagerregal 149 verläuft. Zusätzlich ist an jedem Kommissionierplatz 156 innerhalb eines Kommissionierganges 155 eine zur Förderbahn 160 parallel verlaufende Kommissionierbahn 161 angeordnet, die über einen Ein- und Ausschleuser (nicht dargestellt) mit der Förderbahn 160 verbunden ist. Die Kommissionierbahn 161 erstreckt sich nur über eine Teillänge der Förderbahn 160.

Ein über den Rechner, insbesondere Lagerverwaltungsrechner, erfasster Kundenauftrag kann auch einen Kommissionierauftrag für eine oder mehrere Kommissionierpersonen 157 enthalten. Die Kommissionierperson 157 wird durch eine Ein- und/oder Ausgabevorrichtung 162 hinsichtlich der einzelnen Kommissioniervorgänge geführt, beispielsweise sind an den einzelnen Durchlaufkanälen 158 Fachanzeigen vorgesehen, an denen die Entnahmemenge angezeigt wird. Damit der Kommissioniervorgang vonstatten gehen kann, wird als Versandträger 73 entweder ein durch die Kommissionierung entstehender leerer Ladungsträger 69 verwendet. Andererseits kann der leere Versandträger 73 über die Förderbahnen 72, 160 und Förderumlaufbahn 147 zum betreffenden Kommissionierplatz 156 gefördert und über den Ausschleuser auf die Kommissionierbahn 161 gefördert werden. Dort angekommen, kann die Kommissionierperson 157 die auf der Ausgabevorrichtung 162 angegebene Entnahmemenge an gleichen oder unterschiedlichen Packeinheiten 2 aus einem oder mehreren, an den Durchlaufkanälen 158 bereitgestellten Vorratsträgem 74 entnehmen und in einen oder mehreren auf der Kommissionierbahn 161 bereitgestellten Versandträger 73 kommissioniert werden.

Kann der Versandträger 73 an diesem Kommissionierplatz 156 mit all den zu diesem Kommissionierauftrag benötigten Packeinheiten 2 befüllt werden, wird der volle Versandträger 73 von der Kommissionierbahn 161 über den Einschleuser auf die Fördereinrichtung 160 und von dieser auf die Förderumlaufbahn 147 zum Auftragspuffer 13 gefördert. Der Kommissioniervorgang wird durch die Kommissionierperson 157 an der Eingabevorrichtung 162 quittiert.

Konnte hingegen der Versandträger 73 an diesem Kommissionierplatz 156 nur "teilkommissioniert" werden, wird dieser zu einem oder mehreren weiteren Kommissionierplätzen 156 in demselben Kommissioniergang 155 oder einem anderen Kommissioniergang 155 gefördert. Werden Artikel aus dem zweiten Kommissioniergang 155 benötigt, wird der zum Kommissionierauftrag erst teilweise befüllte Versandträger 73 von der Kommissionierbahn 161 des Kommissionierplatzes 156 im ersten Kommissioniergang 155 auf die Förderbahn 160 eingeschleust und von dieser über die Förderumlaufbahn 147 zur Förderbahn 160 im zweiten Kommissioniergang 155 und danach zu einem der Kommissionierplätze 156 gefördert, an dem die zu diesem Kommissionierauftrag benötigten Artikel in zumindest einem Vorratsträger 74 bereitgestellt werden. Dort angekommen, wird der Kommissionierperson 157 wiederum an der Ausgabevorrichtung 162 die Entnahmemenge angezeigt und von dieser die entsprechende Menge an Packeinheiten 2 in den "teilkommissionierten" Versandträger 73 kommissioniert. Der Versandträger 73 kann nun alle zu diesem Kommissionierauftrag benötigten Packeinheiten 2 enthalten oder wird er für einen weiteren Kommissioniervorgang zu einem anderen Kommissionierplatz 156 gefördert. Das Ende des Kommissioniervorganges wird wiederum durch die Kommissionierperson 157 an der Eingabevorrichtung 162 quittiert.

In den Auftragspuffer 13 werden die bereits in der Packstation 87 zusammengestellten und in das Zwischenlager 9 vorübergehend eingelagerten, ersten Versandträger 73 sowie die aus der Kommissionierung entstehenden zweiten Versandträger 73 sortiert nach Kundenaufträgen zwischengelagert.

Der Auftragspuffer 13 umfasst eine Vielzahl von über Ausschleuser (nicht dargestellt) mit der Förderbahn 94 verbundene und parallel zueinander angeordnete Pufferbahnen 163. Die Pufferbahnen 163 sind an ihren von der Einlagerseite gegenüberliegenden Enden mit einer Förderbahn 164 verbunden, mittels welcher die Versandträger 73 zur zweiten Beladestation 16, insbesondere eine automatische Stapeleinrichtung 165, zugeführt werden. Die zweite Beladestation 16 kann auch mehrere, automatische Stapeleinrichtung 165 umfassen.

Innerhalb einer Pufferbahn 163 werden nur die zu einem Kundenauftrag benötigten Versandträger 73 einer Filiale (Verkaufsstelle) zusammengestellt. Umfasst ein Kundenauftrag Bestellungen aus mehreren Filialen, werden zu jeder dieser Filialen die Versandträger 73 in einer eigenen Pufferbahn 163 zusammengestellt. Liegt eine umfangreiche Bestellung einer Filiale vor, können die Versandträger 73 auch in mehr als einer Pufferbahn 163 zwischengelagert werden. Sind die für eine Filiale benötigten Versandträger 73 in einer oder mehreren Pufferbahnen 163 bereitgestellt, werden diese zur zweiten Stapeleinrichtung 165 gefördert und auf eine oder mehrere zweite Ausliefergebinde 17, beispielsweise Rollcontainer, Palette, gestapelt. Ist der Ladestapel auf dem zweiten Ausliefergebinde 17 fertig gestellt, wird der Ladestapel mit einem Sicherungsmittel, beispielsweise einer Folie umgeben, und als versandfertige Liefereinheit 166 von einer Fördereinrichtung 167 zur Hebevorrichtung 135 gefördert, von dieser auf eine Anliefer- und Versandebene abgesenkt und danach durch die in Fig. 14 dargestellte Auslagerbahn 136 zu einer der Abgabestationen 137 gefördert, an der die Konsolidierungsperson die Liefereinheit 166 entnimmt und entsprechend einer Auslieferreihenfolge in einer der Ausgangspufferzonen 21 abstellt.

Der zweiten Stapeleinrichtung 165 werden über eine Fördereinrichtung 168 von einem Ausliefergebinde-Speicher 169 leere Ausliefergebinde 17 bereitgestellt.

Im nachfolgenden wird das erfindungsgemäße Verfahren zum Betreiben eines Lagersystems 1, insbesondere Lagern, Verteilen und/oder Kommissionieren einer Vielzahl verschiedener Packeinheiten 2 beschrieben.

Im ersten Schritt wird durch den Rechner, insbesondere Lagerverwaltungsrechner, ein Kundenauftrag erfasst, der eine oder mehrere erste und/oder zweite Ausliefergebinde 15 umfassen kann. Werden die am Wareneingang 3 angelieferten Vorratseinheiten 5 an der Aufgabestation 28 vom Lagerarbeiter 26 abgegeben, werden an der Prüfstation 31 die Packeinheiten 2 durch Auslesen der Daten aus dem Datenträger identifiziert und im Eingangslager 4 eingelagert.

Von jeder einzulagernden Packeinheit 2 werden vom Rechner die Artikeleigenschaften bzw. Packeinheiten-Eigenschaften, wie die Abmessungen, das Gewicht, die Dichte, der Kippfaktor (Verhältnis zwischen einer Seitenlänge und Höhe der Packeinheit), Stabilität, Dichtheit eines Verschlusses einer mit Flüssigkeit gefüllten Packeinheit 2, der Verpackungstyp, beispielsweise Karton, Kunststoff, Tragfähigkeit und/oder Form der Packeinheit 2 und dgl. erfasst und als Stammdaten in einer Datenbank des Verwaltungssystems hinterlegt. Aus diesen Artikeleigenschaften wird vorzugsweise durch ein Computerprogramm oder durch empirische Versuche zu jedem Artikel (Packeinheit) eine Fördereigenschaft ermittelt.

Das erfindungsgemäße Lagersystem 1 bevorratet mehrere hunderte bis tausende unterschiedliche Artikel, wovon eine Vielzahl der Artikel einer ersten Klassifikationsgruppe, einer zweiten Klassifikationsgruppe und eine Restmenge einer dritten Klassifikationsgruppe zugeordnet werden. Die Fördereigenschaft definiert diese Klassifikationsgruppen.

Die erste Klassifikationsgruppe umfasst jene Artikel, die über das oben beschriebene Packeinheiten-Verteilsystem automatisch förderbar, in das erste Zwischenlager 8 automatisch ein- und auslagerbar und von der ersten Stapeleinrichtung 128 automatisch auf dem Ausliefergebinde 15 gestapelt werden kann. Solche Packeinheiten 2 sind in der Regel durch Kartonagen oder durch auf einem stabilen Untersatz abgestellte und mit einer Kunststofffolie umwickelten Verpackungseinheiten und dgl. gebildet.

Die Artikel (Packeinheiten) der zweiten Klassifikationsgruppe sind über das oben beschriebene Packeinheiten-Verteilsystem nur in einigen Förderabschnitten förderbar und können nicht im ersten Zwischenlager ein- und ausgelagert und über die erste Stapeleinrichtung automatisch gestapelt werden.

Artikel der zweiten Klassifikationsgruppe können zusätzlich noch in Klassifikationsuntergruppen auf Basis von Gewichtsklassen und eine andere der Artikeleigenschaften aufgeteilt werden. So können Artikeln innerhalb der ersten Gewichtsklasse, beispielsweise bis 10 kg, nicht durch das Packeinheiten-Verteilsystem gefördert werden und müssen auf dem Anliefergebinde 32 an der Packstation 87 auf der Hebevorrichtung 100 bereitgestellt werden. Bei den Artikeln der ersten Klassifikationsuntergruppe handelt es sich um Artikel mit geringem Gewicht und beispielsweise kleinen Abmessungen.

Artikeln der zweiten Klassifikationsuntergruppe können automatisch depalettiert und nur durch einige Förderabschnitte des Packeinheiten-Verteilsystems, insbesondere durch die Förderbahn 93 zur Packstation 87 gefördert werden. Bei diesen Artikeln handelt es sich um Artikel der zweiten Gewichtsklasse, beispielsweise größer 10 kg, die beispielsweise mittels einer Verpackungsfolie aber ohne stabilen Untersatz zu einer Packeinheit zusammengefasst sind.

Die Artikel der dritten Klassifikationsgruppe können vom automatischen Packeinheiten-Verteilsystem nicht gefördert, in das erste Zwischenlager ein- und ausgelagert und/oder von der ersten Stapeleinrichtung 128 gestapelt werden. Bei diesen Artikeln handelt es sich um Sperngteile, die wie oben beschrieben, die von einem Lagerarbeiter 141 händisch auf ein erstes Ausliefergebinde 15 geladen werden.

Wird ein Kundenauftrag abgearbeitet, wird eine Vorratseinheit 5 vom Eingangslager 4 entnommen. Es ist bereits zum Zeitpunkt der Entnahme der Vorratseinheit 5 und der an der Aufgabestation 28 vorangegangen Identifizierung der Packeinheiten 2 bekannt, welche Fördereigenschaft(en) die Packeinheit 2 aufweist und welcher Klassifikationsgruppe die Packeinheit 2 angehört.

Die aus den Packeinheiten-Eigenschaften (Artikelstammdaten) durch ein am Rechner laufendes Computerprogramm oder empirische Versuche zu jedem Artikel (Packeinheit) ermittelte und vom Rechner erfasste Fördereigenschaft bzw. Klassifikationsgruppe wird in einer Datenbank abrufbar hinterlegt. Wird eine Packeinheit 2 von der Packeinheiten-Identifikationseinrichtung identifiziert, insbesondere Daten vom Datenträger, beispielsweise ein Identifikationscode vom Rechner erfasst, wird anhand dieses Identifikationscodes auf die diesem zugeordnete und aus der Datenbank abrufbaren Packeinheiten-Eigenschaften zurückgegriffen, die erste oder zweite Klassifikationsgruppe festgelegt und eine Packeinheit 2 automatisch entweder über das Packeinheiten-Verteilsystem zur ersten Beladestation 14 oder über die Packstation 87 zur zweiten Beladestation 16 gefördert. Werden die Packeinheiten 2 (Sperrigteile) als der dritten Klassifikationsgruppe angehörend festgelegt, werden diese durch das Vorratseinheiten-Verteilsystem unmittelbar in den Lagerbereich 142 des Eingangslagers 4 eingelagert.

Wird ein Kundenauftrag - der üblicherweise eine Vielzahl von gleichen oder unterschiedlichen Packeinheiten 2 enthält - vom Rechner erfasst, ist mit diesem Zeitpunkt bekannt, wie die Packeinheiten 2 zu diesem Auftrag im Lagersystem 1 verteilt werden müssen.

### Packeinheiten der ersten Klassifikationsgruppe:

Werden die Packeinheiten 2 als der ersten Klassifikationsgruppe angehörend identifiziert, wird die Vorratseinheit 5 durch das Regalförderfahrzeug 43 von der Anliefer- und Versandebene in die Umlagerebene angehoben und zu einem der beiden Förderumlaufbahnen 48, 49 bis zu wenigstens einer Depalettiereinrichtung 6, 7 gefördert. Dort angekommen, werden die gemäß einem Kundenauftrag benötigten Packeinheiten 2 vorzugsweise lagenweise von der Vorratseinheit 5 depalettiert. Verbleiben auf dem Anliefergebinde 32 noch zumindest eine Stapellage an Packeinheiten 2, wird die Vorratseinheit 5 in das Eingangslager 4 rückgelagert. Die depalettierten Packeinheiten 2 werden in oben beschriebener Weise vereinzelt und zur Kreissortiermaschine 76 gefördert. Dort angekommen, durchlaufen die Packeinheiten 2 die einzelnen Sortierstufen und werden dabei der ersten Beladestation 14 in einer durch den Rechner mit Eingang des Kundenauftrags vorab berechneten räumlichen Beladungskonfiguration ermittelten Beladereihenfolge zugefördert. Die Stapelung der Packeinheiten 2 auf dem ersten Ausliefergebinde 15 erfolgt in bevorzugter Weise automatisch durch die erste Stapeleinrichtung 128. Genauso gut kann die Stapelung auch durch einen Lagerarbeiter manuell durchgeführt werden.

Umfasst ein Kundenauftrag mehrere erste Ausliefergebinde tauscht die Wechseleinrichtung das mit einem Ladestapel vollständig beladene Ausliefergebinde durch ein leeres Ausliefergebinde aus. Das beladene Ausliefergebinde 15 wird in oben beschriebener Weise gemeinsam mit der Ladehilfe 130 zur Wickelstation 132 gefördert und der Ladestapel mit einem Sicherungsmittel umgeben, ehe die versandfertige Liefereinheit 133 in den Konsolidierungsbereich 18 gefördert und auf einer Abgabestation 137 bereitgestellt wird.

### Packeinheiten der zweiten Klassifikationsgruppe:

Umfasst der Kundenauftrag Packeinheiten 2 der zweiten Klassifikationsgruppe, werden im zweiten Zwischenlager 9 bereitgestellte Versandträger 73 der ersten und/oder zweiten Klassifikationsuntergruppe, daher Versandträger 73, die Artikel der ersten Gewichtsklasse oder zweiten Gewichtsklasse enthalten, durch das Regalförderfahrzeug 148 ausgelagert und in den Auftragspuffer 13 gefördert.

Andererseits kann der Kundenauftrag auch zumindest einen Kommissionierauftrag umfassen. Dazu wird im zweiten Zwischenlager 9 ein leerer Versandträger 73 an zumindest einem Kommissionierplatz 156 mit dem zu diesem Kommissionierauftrag benötigten Packeinheiten 2, insbesondere der ersten Klassifikationsuntergruppe (ersten Gewichtsklasse), befüllt und nach Fertigstellung des Kommissionierauftrags ebenso in den Auftragspuffer 13 gefördert. Sind nun die zu einem Kundenauftrag im Auftragspuffer 13 in oben beschriebener Weise sortierten Versandträger 73 zusammengestellt, werden diese zur zweiten Beladestation 16 gefördert und an dieser automatisch gestapelt. Genauso gut können die Versandträger 73 auch von einem Lagerarbeiter manuell gestapelt werden.

Danach wird der Ladestapel am Ausliefergebinde 17 mit einem Sicherungsmittel umgeben, ehe sie in den Konsolidierungsbereich 18 gefördert und an den Abgabestationen 137 bereitgestellt werden.

Das zweite Zwischenlager 9 enthält einen begrenzten Lagerbestand an unterschiedlichen Packeinheiten 2 in den Versorgungs- und Versandträgem 73, 74. Wird ein Mindestbestand an Packeinheiten 2 in den Versorgungs- und/oder Versandträgem 73, 74 erreicht, wird vom Rechner ein Nachschubauftrag erfasst.

Müssen Packeinheiten 2 der ersten Gewichtsklasse gemäß dem Nachschubauftrag im Versand- und/oder Versorgungsträger 73, 74 in das zweite Zwischenlager 9 nachgelagert werden, wird gemäß diesem Auftrag vom Regalförderfahrzeug 43 aus dem Eingangslager 4 zumindest eine Vorratseinheit 5 ausgelagert und durch das Vorratseinheiten-Verteilsystem zur Packstation 87 gefördert. An der Packstation 87 ist die Ein- und/oder Ausgabevorrichtung 92 vorgesehen, an der dem Lagerarbeiter 88 die Anzahl der zu befüllenden Versand- und Versorgungsträger 73, 74 und die Befüllmenge je Versand- und Versorgungsträger 73, 74 angezeigt werden. Der Lagerarbeiter 88 entnimmt von der Vorratseinheit 5 die Packeinheiten 2 und befüllt nacheinander die erforderliche Anzahl an Versand- und Versorgungsträger 73, 74. Das Ende eines Befüllvorganges eines Versand- oder Versorgungsträgers 73, 74 wird an der Eingabevorrichtung 92 quittiert. Mit der Quittierung wird der Versand- oder Versorgungsträger 73, 74 automatisch in das zweite Zwischenlager 9 gefördert und dort vom Regalförderfahrzeug 148 eingelagert. Die Befüllmenge der Versand- und Versorgungsträger 73, 74 wird vom Rechner mittels der Stammdaten in der Datenbank zu jedem Artikel, insbesondere über deren Abmessungen berechnet.

Wird ein Nachschubauftrag für Packeinheiten 2 der zweiten Gewichtsklasse vom Rechner erfasst, wird durch das Regalförderfahrzeug 43 aus dem Eingangslager 5 zumindest eine Vorratseinheit 5 ausgelagert und diese zur Depalettiereinrichtung 6, 7 gefördert, an der Vereinzelungsbahn 75 vereinzelt und an der Abzweigung auf die Förderbahn 93 zur Packstation 87 ausgeschleust und zur Packstation 87 gefördert. Dem Lagerarbeiter 88 wird an der Ein- und/oder Ausgabevorrichtung 92 die Anzahl der zu befüllenden Versandträger 73 und die Befüllmenge je Versandträger 73 angezeigt. Das Ende eines Befüllvorganges wird wiederum an der Eingabevorrichtung 92 quittiert. Mit der Quittierung wird der Versandträger 73 automatisch in das zweite Zwischenlager 9 gefördert und dort vom Regalförderfahrzeug 148 eingelagert.

### Packeinheiten der dritten Klassifikationsgruppe:

Die Packeinheiten 2 (Sperrigteile) der dritten Klassifikationsgruppe werden direkt im Eingangslager 5 aus einem hierfür vorgesehenen Lagerbereich 142 über einen Verteilwagen von einem Lagerarbeiter 141 entnommen und auf ein erstes Ausliefergebinde 15 geladen. Der Lagerarbeiter 141 erhält nach Identifizierung der "teilfertigen" Liefereinheit 133, beispielsweise durch scannen eines Barcodes, an der Ein- und/oder Ausgabevorrichtung 143 Informationen über die aus dem Lagerbereich 142 zu entnehmenden Packeinheit(en) 2 und eine Entnahmemenge dieser Packeinheit 2. Das Ende des Kommissioniervorgangs wird an einer Ein- und/oder Ausgabevorrichtung 143 quittiert und die versandfertige Liefereinheit 133 zum Konsolidierungsbereich 18 gefördert und auf einer Abgabestation 137 bereitgestellt.

Die versandfertigen Liefereinheiten 133, 166 werden über die Hebevorrichtung 135 auf die Anliefer- und Versandebene abgesenkt und über die Auslagerbahn 136 zu den Abgabestationen 137 gefördert. Dort angekommen, werden sie von einer Konsolidierungsperson vorzugsweise mittels eines Gabelstaplers 138 abgeholt und zu den Stellplätzen 23 in den Ausgangspufferzonen 21 transportiert und dort in der durch den Rechner gemäß einem Kundenauftrag festgelegten Auslieferreihenfolge auf den Stellplätzen 23 abgestellt.

Die Konsolidierungsperson kommuniziert über eine Ein- und/oder Ausgabevorrichtung 170 mit dem Rechner, in dem in einer Datenbank eine elektronische Kundenauftragsliste hinterlegt ist. Zusätzlich umfasst der Rechner ein Routenplanungsmodul, mittels welchem aus dem vom Rechner erfassten Kundenauftrag ein optimierter Routenplan, in der eine oder mehrere Filialen angefahren werden, und/oder die optimierte Auslieferreihenfolge bzw. optimierte Beladung des Laderaumes auf dem Ausliefer-Transportfahrzeug 171 (Fig. 14) berechnet wird. Ein Kundenauftrag eines Handelsunternehmens umfasst üblicherweise Bestellungen aus mehreren Verkaufsstellen (Filialen), sodass bei der Optimierung der Beladung des Laderaumes die Liefereinheiten 133, 166 in der richtigen Auslieferreihenfolge geladen werden müssen. Die Liefereinheiten 133, 166 die als letztes ausgeliefert werden, müssen in der tiefsten Ladeposition im Laderaum geladen werden, während die Liefereinheiten 133, 166, die als erstes ausgeliefert werden, in der vordersten Ladeposition im Laderaum geladen werden müssen.

Ist ein Kundenauftrag im Konsolidierungsbereich 18 fertig zusammengestellt, werden die Liefereinheiten 133, 166 am Warenausgang 19 auf die Ausliefer-Transportwagen 171, insbesondere Lastwagen, geladen, die an Auslieferungsstationen 172 andocken.

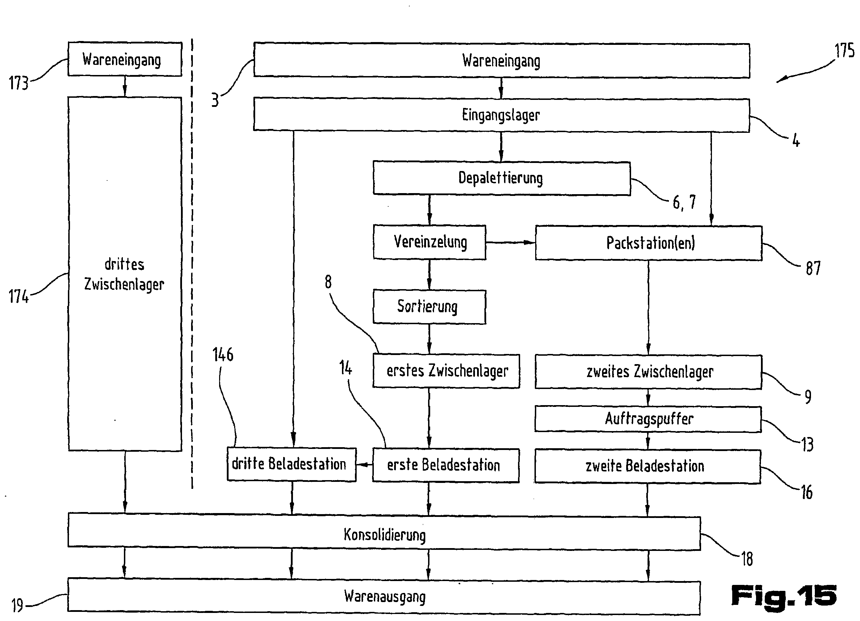

In Fig. 15 ist ein Lagersystem 175 in Form eines Blockdiagramms dargestellt. Wie daraus zu erkennen ist, betreffen die rechts zur strichlierten Senkrechten dargestellten Blöcke das oben beschriebene Lagersystem 1. Die links zur strichlierten Senkrechten dargestellten Blöcke stellen eine Erweiterung des Lagersystems 1 dar.

Das modifizierte Lagersystem 175 umfasst demnach zusätzlich einen zweiten Wareneingang 173 und ein drittes Zwischenlager 174, beispielsweise ein Hochregallager. Das dritte Zwischenlager 174 ist vom ersten und zweiten Zwischenlager 8, 9 getrennt angeordnet. Ebenso ist der Wareneingang 173 vom Wareneingang 3 entkoppelt. Wie nicht näher dargestellt, werden die am Wareneingang 173 angelieferten Versandeinheiten (Liefereinheiten) von Aufgabestationen in das dritte Zwischenlager 174 durch ein Versandeinheiten-Verteilsystem eingelagert und zur Konsolidierung durch das Versandeinheiten-Verteilsystem ausgelagert und zu einer von mehreren Abgabestationen gefördert. Die Versandeinheit wird durch ein Anliefergebinde, beispielsweise eine EURO-Palette, und auf ihm gestapelte, sortenreine oder unterschiedliche Packeinheiten (Artikel) gebildet.

Das dritte Zwischenlager 174, insbesondere das Versandeinheiten-Verteilsystem ist in der österreichischen Patentanmeldung A 783/2008 der gleichen Anmelderin beschrieben und wird zum Gegenstand dieser Offenbarung gemacht.

Es handelt sich beispielsweise um Packeinheiten, welche im dritten Zwischenlager 174 eine sehr hohe Umschlaghäufigkeit besitzen, so genannte Super-Schnelldreher (Super A-Artikel), d.h. pro Zeiteinheit werden sehr große Mengen umgeschlagen und treten statistisch gesehen, sehr häufig in Kundenaufträgen auf. Die Packeinheiten werden im dritten Zwischenlager 174 nur für zwei bis sieben Tage zwischengelagert. Die Versandeinheiten werden in der Form wie sie angeliefert werden auch ausgeliefert, daher wird kein Kommissionierschritt durchgeführt.

Hingegen werden im oben beschriebenen Lagersystem 1 Packeinheiten 2 manipuliert, welche eine hohe Umschlaghäufigkeit besitzen, so genannte Schnelldreher (A-Artikel), und Packeinheiten 2, die eine mittlere oder niedrige Umschlaghäufigkeit besitzen, so genannte Mittel- und Langsamdreher (B-Artikel, C-A-rtikel).

Ein Kundenauftrag kann mehrere, beispielsweise drei Kommissionieraufträge umfassen. Gemäß einem ersten Kommissionierauftrag werden die Packeinheiten 2 an der ersten Beladestation 14 auf das erste Ausliefergebinde 15 geladen. Gemäß einem zweiten Kommissionierauftrag werden die Versandträger 73 an der zweiten Beladestation 16 auf das zweite Ausliefergebinde 17 geladen. Gemäß einem dritten Kommissionierauftrag werden die Packeinheiten 2 an der dritten Beladestation 146 auf das dritte Ausliefergebinde geladen.

Ein wesentlicher Vorteil besteht nun darin, dass diese Kommissionieraufträge parallel abgearbeitet und entkoppelt davon, eine oder mehrere Versandeinheiten aus dem dritten Zwischenlager 174 ausgelagert und im Konsolidierungsbereich 18 gemäß einem Kundenauftrag bereitgestellt werden können, wie in Fig. 15 des Blockdiagramms dargestellt. Der Lager- und Verteilprozess der Versandeinheiten, die Super-Schnelldreher-Packeinheiten enthalten, ist nicht durch die Lager-, Kommissionier- und Verteilprozesse der Packeinheiten 2 im Lagersystem 1 blockiert. Ebenso wird im Lagersystem 1 eine Entkoppelung der Lager-, Kommissionier- und Verteilprozesse zwischen den Packeinheiten 2 der ersten, zweiten und dritten Klassifikationsgruppe erreicht.

Der Kundenauftrag kann nun die Liefereinheit(en) 133, 166 und/oder Versandeinheit(en) umfassen und erhält die Konsolidierungsperson im oben beschriebenen Konsolidierungsbereich 18 nacheinander die versandfertigen Liefer- und/oder Versandeinheit(en). Sie wird nicht zu einem Zeitpunkt von Liefer- und Versandeinheiten "überhäuft". Die Liefereinheiten 133, 166 und/oder Versandeinheiten werden sodann im Konsolidierungsbereich 18 in einer für den Transport auf dem Ausliefer-Transportfahrzeug 171 gemäß dem Kundenauftrag festgelegten Auslieferreihenfolge zusammengestellt und in dieser Reihenfolge an den Auslieferungsstationen 172 im Warenausgang 19 auf das Ausliefer-Transportfahrzeug 171 geladen.

Die Ausführungsbeispiele zeigen mögliche Ausführungsvarianten des Lagersystems 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Lagersystems 1, dieses bzw. dessen Bestandteile teilweise unmaßstäblich und/oder vergrößert und/oder verkleinert dargestellt wurden.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

### Bezugszeichenaufstellung

- 1: Lagersystem
- 2: Packeinheit
- 3: Wareneingang
- 4: Eingangslager
- 5: Vorratseinheit

- 6: Depalettiereinrichtung
- 7: Depalettiereinrichtung
- 8: Zwischenlager
- 9: Zwischenlager

- 13: Auftragspuffer
- 14: Beladestation
- 15: Ausliefergebinde

- 16: Beladestation
- 17: Ausliefergebinde
- 18: Konsolidierungsbereich
- 19: Warenausgang
- 20: Eingangspufferzone

- 21: Ausgangspufferzone
- 22: Stellplatz
- 23: Stellplatz
- 24: Anlieferungsstation
- 25: Lieferanten-Transportfahrzeug

- 26: Lagerarbeiter
- 27: Verteilwagen
- 28: Aufgabestation
- 29: Förderbahn
- 30: Ein- und/oder Ausgabevorrichtung

- 31: Prüfstation
- 32: Anliefergebinde
- 33: Lesegerät
- 34: Lagerbereich
- 35: Lagerbereich

- 36: Lagerregal
- 37: Gasse
- 38: Lagerkanal
- 39: Förderumlaufbahn
- 40: Einlagerbahn

- 41: Verteilerbahn

- 42: Bereitstellungsbahn
- 43: Regalförderfahrzeug
- 44: Umsetzfördervorrichtung
- 45: Plattform

- 46: Fördervorrichtung
- 47: Ein- und Auslagerungsvorrichtung
- 48: Förderumlaufbahn
- 49: Förderumlaufbahn
- 50: Einlagerbahn

- 51: Auslagerbahn
- 52: Förderbahn
- 53: Förderbahn
- 54: Förderbahn
- 55: Verbindungsbahn

- 56: Umsetzfördervorrichtung
- 57: Umsetzfördervorrichtung
- 58: Stapelvorrichtung
- 59: Sortiereinrichtung
- 60: Sammelstation

- 61: Hebevorrichtung
- 62: Pufferplatz
- 63: Fördertechnik
- 64: Ausschleusbahn
- 65: Einschleusbahn

- 66: Förderbahn
- 67: Stapelvorrichtung
- 68: Handhabungseinrichtung
- 69: Ladungsträger
- 70: Förderbahn

- 71: Hebevorrichtung
- 72: Förderbahn
- 73: Versandträger
- 74: Versorgungsträger
- 75: Vereinzelungsbahn

- 76: Kreissortiermaschine
- 77: Einrichtung
- 78: Einrichtung
- 79: Förderrichtung
- 80: Schiebeeinrichtung

- 81: Förderrolle
- 82: Drehvorrichtung
- 83: Kippvorrichtung
- 84: Drehvorrichtung
- 85: Einschleusförderer

- 86: Transportunterlage
- 87: Packstation
- 88: Lagerarbeiter
- 89: Bereitstellungsbahn
- 90: Bereitstellungsbahn

- 91: Einschleusbahn
- 92: Ein- und/oder Ausgabevorrichtung
- 93: Förderbahn
- 94: Förderbahn
- 95: Förderbahn

- 96: Abstützplatte
- 97: Bereitstellungsbahn
- 98: Verteilwagen
- 99: Rücklagerbahn
- 100: Hebevorrichtung

- 101: Anlieferförderbahn
- 102: Einlagerbahn
- 103: Regalförderfahrzeug
- 104: Sortierfördereinrichtung
- 105:

- 107: Transportumlauf
- 108: Lagerregal
- 109: Lagerregal
- 110: Gasse
- 111: Lagerkanal

- 112: Plattform
- 113: Bereitstellungsbahn
- 114: Bereitstellungsbahn
- 115: Pufferbahnhof
- 116: Ausschleuser

- 117: Drehvorrichtung
- 118: Auftragskanal
- 119: Überlaufkanal
- 120: Packeinheitengruppe
- 121: Auslagerbahn

- 122: Beschickungsförderbahn

- 123: Plattform
- 124: Überlaufbahn
- 125: Pufferbahnhof
- 126: Ausschleuser

- 127: Drehvorrichtung
- 128: Stapeleinrichtung
- 129: Födereinrichtung
- 130: Ladehilfe
- 131: Födereinrichtung

- 132: Wickelstation
- 133: Liefereinheit (Collis)
- 134: Födereinrichtung
- 135: Hebevorrichtung
- 136: Auslagerbahn

- 137: Abgabestation
- 138: Gabelstapler
- 139: Nachrüstvorrichtung
- 140: Abgabestation
- 141: Lagerarbeiter

- 142: Lagerbereich
- 143: Ein- und/oder Ausgabevorrichtung
- 144: Aufgabestation
- 145: Födereinrichtung
- 146: Beladestation

- 147: Förderumlaufbahn
- 148: Regalförderfahrzeug
- 149: Lagerregal
- 150: Lagerkanal
- 151: Gasse

- 152: Plattform
- 153: Einlagerbahn
- 154: Auslagerbahn
- 155: Kommissioniergang
- 156: Kommissionierplatz

- 157: Kommissionierperson
- 158: Durchlaufkanal
- 159: Übergabebereich
- 160: Förderbahn
- 161: Kommissionierbahn

- 162: Ein- und/oder Ausgabevorrichtung
- 163: Pufferbahn
- 164: Förderbahn
- 165: Stapeleinrichtung
- 166: Liefereinheit

- 167: Fördereinrichtung
- 168: Fördereinrichtung
- 169: Ausliefergebinde-Speicher
- 170: Ein- und/oder Ausgabevorrichtung
- 171: Ausliefer-Transportfahrzeug

- 172: Auslieferungsstation
- 173: Wareneingang
- 174: Zwischenlager
- 175: Lagersystem

## Patentansprüche

1. Verfahren zum Betreiben eines Lagersystems (1; 175), bei dem eine Vielzahl von verschiedenen Packeinheiten (2) auf Anliefergebinden (32) als Vorratseinheiten (5) in einem Eingangslager (4) eingelagert wird, und von den Packeinheiten (2) Packeinheiten-Eigenschaften ausgewählt aus der Gruppe umfassend Abmessung, Gewicht, Dichte, Kippfaktor, Stabilität, Dichtheit eines Verschlusses einer mit Flüssigkeit gefüllten Packeinheit (2), der Verpackungstyp, Tragfähigkeit und/oder Form der Packeinheit (2) in einer Datenbank erfasst werden, und für die Packeinheiten (2) aus den Packeinheiten-Eigenschaften eine Fördereigenschaft ermittelt wird und durch einen Rechner anhand der Fördereigenschaft für jede Packeinheit (2) eine entsprechende Klassifikationsgruppe festgelegt wird, **dadurch gekennzeichnet, dass** eine erste Klassifikationsgruppe jene Packeinheiten (2) definiert, welche durch zumindest eine Depalettiereinrichtung (6, 7) von den Vorratseinheiten (5) depalettiert, über ein automatisiertes Packeinheiten-Verteilsystem gefördert, in einem automatisierten, ersten Zwischenlager (9) verteilt, und bei dem die für einen Kunden- bzw. Kommissionierauftrag benötigten Packeinheiten (2) aus dem Zwischenlager (9) ausgelagert und von einer automatisierten Stapeleinrichtung (128) einer ersten Beladestation (14) auf ein Ausliefergebinde (15) geladen werden, und eine zweite Klassifikationsgruppe jene Packeinheiten (2) definiert, welche zu einer Packstation (87) gefördert und in dieser mehrere Packeinheiten (2) manuell in zumindest einen Ladungsträger (69) umgepackt werden, worauf die Ladungsträger (69) über ein automatisiertes Ladungsträger-Verteilsystem zu einem zweiten Zwischenlager (9) gefördert und in diesem verteilt, und an einer zweiten Beladestation (16) die Ladungsträger (69) mit den für einen Kunden- bzw. Kommissionierauftrag benötigten Packeinheiten (2) auf ein Ausliefergebinde (17) geladen werden.

2. Verfahren nach Anspruch 1, **dadurch gekennzeichnet, dass** die Packeinheiten (2) der ersten Klassifikationsgruppe nach der Depalettierung von den Vorratseinheiten (5) vereinzelt und in mehreren Stufen sortiert zur ersten Beladestation (14) gefördert werden.

3. Verfahren nach Anspruch 2, **dadurch gekennzeichnet, dass** in einer der Sortierstufen die Packeinheiten (2) durch das Packeinheiten-Verteilsystem nach, vom Rechner vorgegebenen Sortierkriterien, insbesondere Lager- oder Leistungskennzahl des Verteilsystems in einem seiner Förderabschnitte, zu diesen Sortierkriterien zugeordneten Lagerregale (108, 109) in das erste Zwischenlager (8) gefördert werden.

4. Verfahren nach Anspruch 2, **dadurch gekennzeichnet, dass** in einer der Sortierstufen die Packeinheiten (2) durch das Packeinheiten-Verteilsystem nach, vom Rechner vorgegebenen Sortierkriterien, insbesondere eine Lagerkennzahl, auf die zu diesen Sortierkriterien zugeordneten Lagerpositionen in das erste Zwischenlager (8) gefördert werden.

5. Verfahren nach Anspruch 2, **dadurch gekennzeichnet, dass** in einer der Sortierstufen die Packeinheiten (2) durch das Packeinheiten-Verteilsystem nach Kommissionieraufträgen sortiert in auftragsbezogene Lagerkanäle (118) im ersten Zwischenlager (8) eingelagert werden.

6. Verfahren nach Anspruch 2, **dadurch gekennzeichnet, dass** in einer der Sortierstufen die zu einem Kommissionierauftrag benötigten Packeinheiten (2) durch das ein Packeinheiten-Verteilsystem aus auftragsbezogenen Lagerkanälen (118) im ersten Zwischenlager (8) mehrere Packeinheitengruppen (120) parallel ausgelagert und die Packeinheitengruppen (120) in eine definierte Reihenfolge sortiert werden.

7. Verfahren nach Anspruch 5 oder 6, **dadurch gekennzeichnet, dass** bei der Einlagerung der Packeinheiten (2) in die auftragsbezogenen Lagerkanäle (118) und Auslagerung der Packeinheitengruppen (120) aus den auftragsbezogenen Lagerkanälen (118) die Packeinheiten (2) und Packeinheitengruppen (120) zusätzlich nach, vom Rechner vorgegebenen Sortierkriterien in eine durch ihre räumliche Beladungskonfiguration in einem Ladestapel auf dem ersten Ausliefergebinde (15) ermittelte Beladungsreihenfolge sortiert werden.

8. Verfahren nach Anspruch 2 oder 6, **dadurch gekennzeichnet, dass** in einer der Sortierstufen die Packeinheiten (2) innerhalb einer Packeinheitengruppe (120) durch ein Packeinheiten-Verteilsystem nach, vom Rechner vorgegebenen Sortierkriterien sortiert und anschließend zur ersten Beladestation (15) gefördert werden.

9. Verfahren nach einem der Ansprüche 1 bis 8, **dadurch gekennzeichnet, dass** die Packeinheiten (2) durch die Depalettiereinrichtung (6, 7) von den Vorratseinheiten (5) depalettiert und vereinzelt werden, wobei die aus der zumindest einen entnommenen Stapellage vereinzelten Packeinheiten (2) gemäß einem Kommissionierauftrag in entsprechender Anzahl in wenigstens einen auftragsbezogenen Lagerkanal (118) des ersten Zwischenlagers (8) und die verbleibende Anzahl an Packeinheiten (2) in wenigstens einen freien Lagerkanal (111) eingelagert werden.

10. Verfahren nach Anspruch 1, **dadurch gekennzeichnet, dass** in der Packstation (87) die Packeinheiten (2) in, durch den Ladungsträger (69) gebildeten Versorgungsträger (74) oder ersten Versandträger (73) umgepackt werden und **dass** die Packeinheiten (2) mittels der Versorgungsträger (74) an mindestens einem Kommissionierplatz (156) bereitgestellt und die zu einem Kommissionierauftrag benötigten Packeinheiten (2) aus zumindest einem Versorgungsträger (74) entnommen und in mindestens einen zweiten Versandträger (73) kommissioniert werden.

11. Verfahren nach Anspruch 1, **dadurch gekennzeichnet, dass** das zweite Zwischenlager (9) Durchlaufkanäle (158) aufweist, welche jeweils an ihrem dem Kommissionierplatz (156) zugewandten Ende eine Entnahmeposition aufweisen, in der die Versorgungsträger (74) bereitgestellt werden und eine Kommissionierperson (157) aus dem Versorgungsträger (74) die Packeinheiten (2) gemäß dem Kommissionierauftrag entnehmen kann, und an seinem dem Kommissionierplatz (156) zugewandten Ende einen Übergabebereich (159) aufweist, wo die vom Zwischenlager (9) zugeführten Versorgungsträger (74) an den Durchlaufkanal (158) übergeben werden.

12. Verfahren nach Anspruch 10, **dadurch gekennzeichnet, dass** die ersten und zweiten Versandträger (73) vor der Beladung auf das zweite Ausliefergebinde (17) nach Kundenaufträgen sortiert, in einem Auftragspuffer (13) bereitgestellt werden.

13. Verfahren nach Anspruch 1, **dadurch gekennzeichnet, dass** zumindest eine Vorratseinheit (5) vom Eingangslager (4) zur Packstation (87) gefördert und an dieser Packeinheiten (2) der zweiten Klassifikationsgruppe in zumindest einen ersten Versandträger (73) oder Versorgungsträger (74) umgepackt werden, wenn im zweiten Zwischenlager (9) eine Lagerkennzahl, insbesondere ein Lagerbestand an Versand- oder Versorgungsträger (73) einen Sollwert unterschreitet.

14. Verfahren nach Anspruch 1, **dadurch gekennzeichnet, dass** zumindest eine Vorratseinheit (5) vom Eingangslager (4) zu einer Depalettiereinrichtung (6, 7) gefördert und an dieser Packeinheiten (2) depalettiert und danach an der Packstation (87) in zumindest einen ersten Versandträger (73) umgepackt werden, wenn im zweiten Zwischenlager (9) eine Lagerkennzahl, insbesondere ein Lagerbestand an Versand- oder Versorgungsträgern (73, 74) einen Sollwert unterschreitet.

15. Verfahren nach Anspruch 1, **dadurch gekennzeichnet, dass** eine dritte Klassifikationsgruppe jene Packeinheiten (2) definiert, welche als Vorratseinheiten (5) im Eingangslager (4) bereitgestellt und aus diesem die, für einen Kommissionierauftrag benötigten Packeinheiten (2) ausgelagert und auf das zu diesem Kommissionierauftrag bereitgestellte, erste Ausliefergebinde (15) geladen werden.

16. Verfahren nach Anspruch 1, **dadurch gekennzeichnet, dass** das Eingangslager (4) Lagerregale (36) mit in übereinander liegenden Lagerebenen nebeneinander angeordneten Lagerkanälen (38) und ein Vorratseinheiten-Verteilsystem aufweist, wobei die Vorratseinheiten (5) von Anlieferungsstationen (24) im Wareneingang (3) übernommen und dem Vorratseinheiten-Verteilsystem zugeführt und von diesem basierend auf einer, vom Rechner ermittelten Lagerkennzahl, wie ein Lagerfüllgrad und/oder Lagerbestand an Vorratseinheiten (5) im Eingangslager (4) auf die Lagerregale (36) verteilt werden.

17. Verfahren nach einem der Ansprüche 1 bis 16, **dadurch gekennzeichnet, dass** das Vorratseinheiten-Verteilsystem auf einer Anliefer- und Versandebene eine unmittelbar an einer Stirnseite der Lagerregale (36) anschließende Förderumlaufbahn (39) aufweist, wobei die angelieferten Vorratseinheiten (5) an der Förderumlaufbahn (39) umlaufen, wenn die Leistungskennzahl des Versandeinheiten-Verteilsystems, wie die Auslastung des Versandeinheiten-Verteilsystems in einem seiner Förderabschnitte einen Sollwert erreicht.

18. Verfahren nach einem der Ansprüche 1 bis 17, **dadurch gekennzeichnet, dass** das Eingangslager (4) in Lagerbereiche (34, 35) aufgeteilt ist und das Vorratseinheiten-Verteilsystem auf einer Umlagerebene unmittelbar an einer Stirnseite der Lagerregale (36) anschließende Förderumlaufbahnen (48, 49) aufweist, wobei die Vorratseinheiten (5) aus dem ersten Lagerbereich (34) über das Vorratseinheiten-Verteilsystem zur ersten Förderumlaufbahn (48) und aus dem zweiten Lagerbereich (35) über das Vorratseinheiten-Verteilsystem zur zweiten Förderumlaufbahn (49) und danach von den Förderumlaufbahnen (48, 49) jeweils zu zumindest einer Depalettiereinrichtung (6, 7) gefördert werden.

19. Verfahren nach Anspruch 1, **dadurch gekennzeichnet, dass** im Lagersystem (175) ein drittes Zwischenlager (174) vorgesehen ist, und folgende Schritte umfasst:
a) Einlagerung und Verteilung von Versandeinheiten durch ein Versandeinheiten-Verteilsystem in das dritte Zwischenlager (174);
b) Auslagerung zumindest einer Versandeinheit durch das Versandeinheiten-Verteilsystem und Bereitstellung der Versandeinheit im Konsolidierungsbereich (18) gemäß einem vom Rechner erfassten Kundenauftrag;
c) Verteilung und Kommissionierung der Packeinheiten (2) wenigstens einer Liefereinheit (133, 166) sowie Bereitstellung der Liefereinheit (133, 166) im Konsolidierungsbereich (18) gemäß dem Kundenauftrag; und
d) Zusammenstellung der Versand- und Liefereinheiten (133, 166) im Konsolidierungsbereich (18) in einer für den Transport auf einem Ausliefer-Transportfahrzeug (171) gemäß dem Kundenauftrag festgelegten Auslieferreihenfolge, wobei die Schritte a) bis d) parallel ablaufen.

20. Lagersystem (1; 175) zur Durchführung des Verfahrens nach einem der Ansprüche 1 bis 19, umfassend ein Eingangslager (4), in das eine Vielzahl von verschiedenen Packeinheiten (2) auf Anliefergebinden (32) als Vorratseinheiten (5) eingelagert wird, wobei von den Packeinheiten (2) Packeinheiten-Eigenschaften ausgewählt aus der Gruppe umfassend Abmessung, Gewicht, Dichte, Kippfaktor, Stabilität, Dichtheit eines Verschlusses einer mit Flüssigkeit gefüllten Packeinheit (2), der Verpackungstyp, Tragfähigkeit und/oder Form der Packeinheit (2), in einer Datenbank erfasst werden, und ein mit einer Datenbank verbundener Rechner vorgesehen ist, von dem eine aus den Packeinheiten-Eigenschaften ermittelte Fördereigenschaft erfasst wird und mit dem anhand der Fördereigenschaft für jede Packeinheit (2) eine entsprechende Klassifikationsgruppe festlegbar ist, **dadurch gekennzeichnet, dass** für die einer ersten Klassifikationsgruppe zugeteilten Packeinheiten (2) eine Depalettiereinrichtung (6, 7) zum Depalettieren der Packeinheiten (2) von den Vorratseinheiten (5), ein automatisiertes Packeinheiten-Verteilsystem für die Förderung der Packeinheiten (2), ein automatisiertes, erstes Zwischenlager (9) für die Packeinheiten (2) und eine erste Beladestation (14) mit einer automatisierten Stapeleinrichtung (128) zum Beladen eines Ausliefergebindes (15) vorgesehen sind, und für die einer zweiten Klassifikationsgruppe zugeteilten Packeinheiten (2) eine Packstation (87) zum manuellen Umpacken von Packeinheiten (2) in zumindest einen Ladungsträger (69), ein automatisiertes Ladungsträger-Verteilsystem für die Förderung der Ladungsträger (69) zu einem zweiten Zwischenlager (9), ein zweites Zwischenlager (9) für die Ladungsträger (69), eine zweite Beladestation (16) zum Beladen eines Ausliefergebindes (17) vorgesehen sind.

21. Lagersystem nach Anspruch 20, **dadurch gekennzeichnet, dass** ein Vorratseinheiten-Verteilsystem und ein Packeinheiten-Verteilsystem und zumindest eine Depalettiereinrichtung (6,7) zum Umladen der Packeinheiten (2) der zweiten Klassifikationsgruppe und zumindest eine Packstation (87) zum Beladen zumindest eines durch einen Ladungsträger (69) gebildeten Versorgungsträgers (74) oder ersten Versandträgers (73) sowie ein zweites Zwischenlager (9) zur temporären Lagerung der Ladungsträger (69) vorgesehen ist, wobei einerseits das Vorratseinheiten-Verteilsystem das Eingangslager (4) und die Packstation (87) und andererseits das Packeinheiten-Verteilsystem die Depalettiereinrichtung (6, 7) und die Packstation (87) verbindet.

22. Lagersystem nach Anspruch 21, **dadurch gekennzeichnet, dass** zumindest ein Kommissionierplatz (156) vorgesehen ist, an dem die zu einem Kommissionierauftrag benötigten Packeinheiten (2) aus zumindest einem Versorgungsträger (74) entnommen und in mindestens einen zweiten Versandträger (73) kommissioniert werden.

23. Lagersystem nach Anspruch 20, **dadurch gekennzeichnet, dass** das Packeinheiten-Verteilsystem eine Kreissortiermaschine (76) umfasst.

## Claims

1. Method of operating a warehouse system (1; 175), whereby a plurality of different packaging units (2) are placed in storage in a goods-in store (4) on delivery pallets (32) as storage units (5), and packaging unit properties of the packaging units (2) selected from a group comprising dimensions, weight, density, tipping factor, stability, the seal of a closure of a packaging unit (2) filled with liquid, packaging type, transportability and/or the shape of the packaging unit (2) are detected in a data bank and a conveying property for the packaging units (2) is determined from the packaging unit properties, and an appropriate classification group is set for every packaging unit (2) by a computer on the basis of the conveying property, **characterised in that** a first classification group defines those packaging units (2) which can be de-palletised from the storage units (5) by means of at least one de-palletising device (6, 7), conveyed via an automated packaging unit distribution system, distributed in an automated first temporary store (9) and the packaging units (2) needed for a customer or picking order moved out of storage in the temporary store (9) and loaded by an automated stacking device (128) at a first loading station (14) onto a despatch pallet (15), and a second classification group defines those packaging units (2) which can be conveyed to a packing station (87) where several packaging units (2) can be manually repacked in at least one load carrier (69), after which the load carrier (69) is conveyed via an automated load carrier distribution system to a second temporary store (9) where it is distributed, and the load carriers (69) together with the packaging units (2) needed for a customer or picking order are loaded onto a despatch pallet (17) at a second loading station (16).

2. Method as claimed in claim 1, **characterised in that** having been de-palletised, the packaging units (2) of the first classification group are removed from the storage units (5) individually and conveyed to the first loading station (14), being sorted in several stages.

3. Method as claimed in claim 2, **characterised in that** the packaging units (2) are conveyed by means of the packaging unit distribution system on the basis of sorting criteria predefined by the computer in one of the sorting stages, in particular warehouse or performance indicators of the distribution system in one of its conveyor sections, and are conveyed to storage shelves (108, 109) in the first temporary store (8) assigned on the basis of these sorting criteria.

4. Method as claimed in claim 2, **characterised in that** the packaging units (2) are conveyed by the packaging unit distribution system on the basis of sorting criteria predefined by the computer in one of the sorting stages, in particular a warehouse indicator, and are conveyed to storage positions in the first temporary store (8) assigned on the basis of these sorting criteria.

5. Method as claimed in claim 2, **characterised in that** the packaging units (2) are placed in storage by a packaging unit distribution system in one of the sorting stages, sorted on the basis of picking orders, and stored in order-related storage passages (118) in the first temporary store (8).

6. Method as claimed in claim 2, **characterised in that** the packaging units (2) needed for a picking order are taken out of storage by a packaging unit distribution system from order-related storage passages (118) in the first temporary store (8) as several packaging unit groups (120) in parallel in one of the sorting stages and the packaging unit groups (120) are sorted into a defined sequence.

7. Method as claimed in claim 5 or 6, **characterised in that** when the packaging units (2) are being placed in storage in the order-related storage passages (118) and the packaging unit groups (120) are being taken out of storage from the order-related storage passages (118), the packaging units (2) and packaging unit groups (120) are additionally sorted on the basis of sorting criteria predefined by the computer in a loading sequence determined on the basis of their spatial loading configuration in a stack on the first despatch pallet (15).

8. Method as claimed in claim 2 or 6, **characterised in that** the packaging units (2) are conveyed within a packaging unit group (120) by a packaging unit distribution system on the basis of sorting criteria predefined by the computer in one of the sorting stages and then conveyed to the first loading station (15).

9. Method as claimed in one of claims 1 to 8, **characterised in that** the packaging units (2) are de-palletised by the de-palletising unit (6, 7) and removed from the storage units (5) individually, and the packaging units (2) separated from the at least one stack layer removed are placed in storage in an appropriate number relating to a picking order in at least one order-related storage passage (118) of the first temporary store (8), and the remaining number of packaging units (2) are placed in storage in at least one free storage passage (111).

10. Method as claimed in claim 1, **characterised in that** in the packing station (87), the packaging units (2) are repacked by load carriers (69) in the form of storage carriers (74) or first freight carriers (73) and **in that** the packaging units (2) are placed in readiness by means of the storage carriers (74) in at least one picking area (156), and the packaging units (2) needed for a picking order are removed from at least one storage carrier (74) and placed in at least one second freight carrier (73).

11. Method as claimed in claim 1, **characterised in that** the second temporary store (9) has continuous passages (158), which have a picking position at their end facing the picking area (156) respectively, in which the storage carriers (74) are placed in readiness and a picker (157) is able to remove the packaging units (2) from the storage carriers (74) in accordance with the picking order, as well as a transfer area (159) at its end facing the picking area (156) where the storage carriers (74) brought in from the temporary store (9) can be transferred to the continuous passage (158).

12. Method as claimed in claim 10, **characterised in that** the first and second freight carriers (73) are placed in an order buffer (13) sorted according to customer orders before being loaded onto the second despatch pallet (17).

13. Method as claimed in claim 1, **characterised in that** at least one storage unit (5) is conveyed from the goods-in store (4) to the packing station (87) and packaging units (2) of the second classification group conveyed to it in at least a first freight carrier (73) or storage carrier (74) are repacked if a warehouse indicator in the second temporary store (9), in particular a stock level of freight or storage carriers (73), falls below a desired value.

14. Method as claimed in claim 1, **characterised in that** at least one storage unit (5) is conveyed from the goods-in store (4) to a de-palletising unit (6, 7) where packaging units (2) are de-palletised and then repacked into at least a first freight carrier (73) at the packing station (87) if a warehouse indicator in the second temporary store (9), in particular a stock level of freight or storage carriers (73, 74), falls below a desired value.

15. Method as claimed in claim 1, **characterised in that** a third classification group is defined for those packaging units (2) which have been placed in readiness in the goods-in store (4) as storage units (5) and the packaging units (2) needed for a picking order are taken out of these and loaded onto the first despatch pallet (15) placed in readiness for this picking order.

16. Method as claimed in claim 1, **characterised in that** the goods-in store (4) has storage shelves (36) with storage passages (38) disposed adjacent to one another in storage levels one above the other and a storage unit distribution system, and the storage units (5) are transferred from goods-in stations (24) at the goods-in entrance (3) and fed to the storage unit distribution system and distributed by it to the storage shelves (36) on the basis of a warehouse indicator determined by the computer, such as a stock level status and/or stock level of storage units (5) in the goods-in store (4).

17. Method as claimed in one of claims 1 to 16, **characterised in that** the storage unit distribution system has a conveyor track (39) directly adjoining a terminal end of the storage shelves (36) on a goods-in and goods-out level, and the inbound storage units (5) circulate on the conveyor track (39) if the performance indicator of the despatch unit distribution system, such as the capacity usage of the despatch unit distribution system in one of its conveyor sections, reaches a desired value.

18. Method as claimed in one of claims 1 to 17, **characterised in that** the goods-in store (4) is divided into storage areas (34, 35) and the storage unit distribution system has conveyor tracks (48, 49) directly adjoining a terminal end of the storage shelves (36) on a transfer level, and the storage units (5) are conveyed out of the first storage area (34) via the storage unit distribution system to the first conveyor track (48) and out of the second storage area (35) via the storage unit distribution system to the second conveyor track (49) and then by the conveyor tracks (48, 49) respectively to at least one de-palletising unit (6, 7).

19. Method as claimed in claim 1, **characterised in that** a third temporary store (174) is provided in the warehouse system (175) and comprises the following steps:
a) despatch units are placed in storage and distributed by a despatch unit distribution system in the third temporary store (174);
b) at least one despatch unit is taken out of storage by the despatch unit distribution system and the despatch unit is placed in readiness in the consolidation area (18) in accordance with a customer order detected by the computer;
c) the packaging units (2) of at least one freight unit (133, 166) are distributed and packed and the freight unit (133, 166) is placed in readiness in the consolidation area (18) in accordance with the customer order; and
d) the despatch and freight units (133, 166) are assembled in the consolidation area (18) in a delivery sequence set in accordance with the customer order in readiness for transportation on a delivery vehicle (171), and steps a) to d) are run in parallel.

20. Warehouse system (1; 175) for operating the method as claimed in one of claims 1 to 19, comprising a goods-in store (4) in which a plurality of different packaging units (2) are placed in storage on delivery pallets (32) serving as storage units (5), and packaging unit properties of the packaging units (2) selected from a group comprising dimensions, weight, density, tipping factor, stability, the seal of a closure of a packaging unit (2) filled with liquid, packaging type, transportability and/or the shape of the packaging unit (2) are detected in a data bank, and a computer connected to a data bank is provided, by means of which a conveying property determined on the basis the packaging unit properties is captured, and by means of which an appropriate classification group can be set for every packaging unit (2) on the basis of the conveying property, **characterised in that** for the packaging units (2) assigned to the first classification group, a de-palletising unit (6, 7) is provided for de-palletising the packaging units (2) from the storage units (5), an automated packaging unit distribution system is provided for conveying the packaging units (2), an automated first temporary store (9) is provided for the packaging units (2) and a first loading station (14) is provided with an automated stacking device (128) for loading a despatch pallet (15), and for the packaging units (2) assigned to a second classification group, a packing station (87) is provided for manually repacking packaging units (2) in at least one load carrier (69), an automated load carrier distribution system is provided for conveying load carriers (69) to a second temporary store (9), a second temporary store (9) is provided for the loading carriers (69), and a second loading station (16) is provided for loading a despatch pallet (17).

21. Warehouse system as claimed in claim 20, **characterised in that** a storage unit distribution system and a packaging unit distribution system and at least one de-palletising unit (6,7) for transferring the packaging units (2) of the second classification group and at least one packing station (87) for loading at least one storage carrier (74) or first freight carriers (73) formed by a load carrier (69) as well as a second temporary store (9) for temporarily storing the load carrier (69) are provided, and the storage unit distribution system connects the goods-in store (4) and packing station (87) on the one hand and the packaging unit distribution system connects the de-palletising unit (6, 7) and packing station (87) on the other hand.

22. Warehouse system as claimed in claim 21, **characterised in that** at least one picking area (156) is provided, at which the packaging units (2) needed for a picking order are removed from at least one storage carrier (74) and placed in at least one second freight carrier (73).

23. Warehouse system as claimed in claim 20, **characterised in that** the packaging unit distribution system comprises a circular sorting machine (76).

## Revendications

1. Procédé d'exploitation d'un système de stockage (1 ; 175) dans lequel une pluralité de différentes unités d'emballages (2) sur des récipients de livraison (32) sont stockés en tant qu'unités de réserve (5) dans un entrepôt d'entrée (4) et les propriétés des unités d'emballages (2), choisies parmi le groupe comprenant les dimensions, le poids, la densité, le facteur de basculement, la stabilité, l'étanchéité d'une fermeture d'une unité d'emballage (2) remplie avec du liquide, le type d'emballage, la capacité et/ou la forme de l'unité d'emballage (2), sont entrées dans une base de données et une caractéristique de transport est déterminée pour les unités d'emballage (2) à partir des propriétés des unités d'emballage et un groupe de classification correspondant est déterminé par un ordinateur à l'aide de la caractéristique de transport pour chaque unité d'emballage (2),**caractérisé en ce qu'**un premier groupe de classification définit les unités d'emballage (2) qui sont dépalettisées des unités de réserve (5) par au moins un dispositif de dépalettisation (6, 7), transportées par un système de distribution des unités d'emballage automatisé, réparties dans un premier entrepôt intermédiaire (9) automatisé, et les unités d'emballage (2) nécessaires pour une commande client ou un ordre de préparation de commande sont sorties de l'entrepôt intermédiaire (9) et chargées par un dispositif d'empilage automatisé (128) d'une première station de chargement (14) sur un récipient de livraison (15), et un deuxième groupe de classification définit les unités d'emballage (2) qui sont transportées vers une station d'emballage (87) et, dans celle-ci, plusieurs unités d'emballage (2) sont manuellement reconditionnées dans au moins un support de chargement (69), les supports de chargement (69) étant ensuite transportés à l'aide d'un système de distribution de supports de chargement automatisé vers un deuxième entrepôt intermédiaire (9) et répartis dans celui-ci et, au niveau d'une deuxième station de chargement (16), les supports de chargement (69) sont chargés avec les unités d'emballage (2) nécessaires pour une commande client ou un ordre de préparation de commande sur un récipient de livraison (17).

2. Procédé selon la revendication 1, **caractérisé en ce que** les unités d'emballage (2) du premier groupe de classification sont séparés, après la dépalettisation, des unités de réserve (5) et transportées triées en plusieurs étapes vers la première station de chargement (14).

3. Procédé selon la revendication 2, **caractérisé en ce que**, dans une des étapes de triage, les unités d'emballage (2) sont transportées par le système de distribution des unités d'emballage, selon des critères de tri prédéterminés par l'ordinateur, notamment les valeurs caractéristiques de stockage ou de performance du système de distribution dans une de ses sections de convoyage, vers des étagères de stockage (108, 109) correspondant à ces critères de tri dans le premier entrepôt intermédiaire (8).

4. Procédé selon la revendication 2, **caractérisé en ce que**, dans une des étapes de tri, les unités d'emballage (2) sont convoyées par le système de distribution des unités d'emballage, selon des critères de tri prédéterminés par l'ordinateur, notamment une valeur caractéristique de stockage, vers les positions de stockage correspondant à ces critères de tri dans le premier entrepôt intermédiaire (8).

5. Procédé selon la revendication 2, **caractérisé en ce que**, dans une des étapes de tri, les unités d'emballage (2) sont stockées par le système de distribution des unités d'emballage, triées selon les ordres de préparation de commande, dans des canaux de stockage (118) dans le premier entrepôt intermédiaire (8).

6. Procédé selon la revendication 2, **caractérisé en ce que**, dans une des étapes de tri, les unités d'emballage (2) nécessaires à un ordre de préparation de commande sont sorties, par le système de distribution des unités d'emballage, hors des canaux de stockage (118) correspondant à la commande, dans un entrepôt intermédiaire (8) plusieurs groupes d'unités d'emballage (120) sont sorties en parallèle et les groupes d'unités d'emballage (120) sont triés dans un ordre défini.

7. Procédé selon la revendication 5 ou 6, **caractérisé en ce que**, lors du stockage des unités d'emballage (2) dans les canaux de stockage (118) correspondant aux commandes et lors de la sortie des groupes d'unités d'emballage (120) hors des canaux de stockage (118) correspondant aux commandes, les unités d'emballage (2) et les groupes d'unités d'emballage (120) sont en outre triés, selon des critères prédéterminés par l'ordinateur, dans un ordre de chargement déterminé par leur configuration spatiale de chargement, dans un empilage de chargement sur le premier récipient de livraison (15).

8. Procédé selon la revendication 2 ou 6, **caractérisé en ce que**, dans une des étapes de tri, les unités d'emballage (2) sont triées au sein d'un groupe d'unités d'emballage (120) par un système de distribution des unités d'emballage selon des critères de tri prédéterminés par l'ordinateur, puis convoyées vers la première station de chargement (15).

9. Procédé selon l'une des revendications 1 à 8, **caractérisé en ce que** les unités d'emballage (2) sont dépalettisées et séparées des unités de réserve (5) à l'aide du dispositif de dépalettisation (6, 7), les unités d'emballage (2) provenant d'au moins d'un empilement prélevé étant stockées dans au moins un canal de stockage (118) correspondant à la commande du premier entrepôt intermédiaire (8) et le nombre résiduel d'unités d'emballage (2) sont stockés dans au moins un canal de stockage libre (111).

10. Procédé selon la revendication 1, **caractérisé en ce que**, dans la station d'emballage (87), les unités d'emballage (2) sont reconditionnées dans le support d'approvisionnement (74), constitué par le support de chargement (69), ou le premier support d'expédition (73) et **en ce que** les unités d'emballage (2) sont préparées à l'aide des supports d'approvisionnement (74) au niveau d'au moins un emplacement de préparation de commande (156) et les unités d'emballage (2) nécessaires pour un ordre de préparation de commande sont prélevées dans au moins un support d'approvisionnement (74) et préparées dans au moins un deuxième support d'expédition (73).

11. Procédé selon la revendication 1, **caractérisé en ce que** le deuxième entrepôt intermédiaire (9) comprend des canaux de passage (158) comprenant, au niveau de leur extrémité orientée vers l'emplacement de préparation de commande (156), une position de prélèvement dans laquelle les supports d'approvisionnement (74) sont préparés et une personne préparant la commande (157) peut prélever sur le support d'approvisionnement (74) les unités d'emballage (2) en fonction de l'ordre de préparation de la commande et, au niveau de son extrémité orientée vers l'emplacement de préparation de commande (156), une zone de transfert (159) où les supports d'approvisionnement (74) introduits à partir de l'entrepôt intermédiaire (9) sont transférés vers le canal de passage (158).

12. Procédé selon la revendication 10, **caractérisé en ce que** les premier et deuxième supports d'expédition (73) sont triés, avant le chargement, sur le deuxième récipient de livraison (17) en fonction des commandes client et préparés dans une zone tampon de commande (13).

13. Procédé selon la revendication 1, **caractérisé en ce qu'**au moins une unité de réserve (5) est convoyée de l'entrepôt d'entrée (4) vers la station d'emballage (87) et reconditionnée dans les unités d'emballage (2) du deuxième groupe de classification dans au moins un premier support d'expédition (73) ou support d'approvisionnement (74) lorsque, dans le deuxième entrepôt intermédiaire (9), une valeur caractéristique de stockage, plus particulièrement un stock de supports d'expédition ou d'approvisionnement (73), passe en dessous d'une valeur de consigne sur .

14. Procédé selon la revendication 1, **caractérisé en ce qu'**au moins une unité de réserve (5) est convoyée de l'entrepôt d'entrée (4) vers un dispositif de dépalettisation (6, 7) et dépalettisée au niveau de ces unités d'emballage (2) puis reconditionnée au niveau de la station d'emballage (87) dans au moins un support d'expédition (73) lorsque, dans le deuxième entrepôt intermédiaire (9), une valeur caractéristique de stockage, plus particulièrement un stock de supports d'expédition ou d'approvisionnement (73, 74) passe en dessous d'une valeur de consigne.

15. Procédé selon la revendication 1, **caractérisé en ce qu'**un troisième groupe de classification définit les unités d'emballage (2) préparées en tant qu'unités de réserve (5) dans l'entrepôt d'entrée (4) et hors duquel les unités d'emballage (2) nécessaires pour un ordre de préparation de commande et sur lequel le premier récipient de livraison (15) préparé pour cet ordre de préparation de commande est chargé.

16. Procédé selon la revendication 1, **caractérisé en ce que** l'entrepôt d'entrée (4) comprend des étagères de stockage (36) avec des canaux de stockage (38) disposés les uns à côté des autres sur des niveaux superposés et un système de distribution d'unités de réserve, les unités de réserve (5) étant prises en charge dans l'entrée des marchandises (3) par des stations de livraison (24) et introduites dans le système de distribution d'unités de réserve et, à partir de celui-ci, distribuées sur les étagères de stockage (36) sur la base d'une valeur caractéristique de stockage, comme le degré de remplissage de l'entrepôt et/ou le stock d'unités de réserve (5) dans l'entrepôt d'entrée (4).

17. Procédé selon l'une des revendications 1 à 16, **caractérisé en ce que** le système de distribution d'unités de réserve comprend, sur un niveau de livraison et d'expédition, une piste circulaire de convoyage (39) reliée directement à une face frontale des étagères de stockage (36), les unités de réserve (5) livrées circulant sur la piste circulaire de convoyage (39) lorsque la valeur caractéristique de performance du système de distribution d'unités d'expédition, comme le taux de charge du système de distribution d'unités d'expédition atteint une valeur de consigne dans une de ses sections de convoyage.

18. Procédé selon l'une des revendications 1 à 17, **caractérisé en ce que** l'entrepôt d'entrée (4) est divisé en zones de stockage (34, 35) et le système de distribution d'unités de réserve comprend, sur des pistes circulaires de convoyage (48, 49) reliées directement, sur un niveau de déplacement, à une face frontale des étagères de stockage (36), les unités de réserve (5) étant convoyées hors de la première zone de stockage (34) à l'aide du système de distribution d'unités de réserve vers la première piste circulaire de convoyage (48) et hors de la deuxième zone de stockage (35) à l'aide du système de distribution d'unités de réserve vers la deuxième piste circulaire de convoyage (49) puis des pistes circulaires de convoyage (48, 49) vers au moins un dispositif de dépalettisation (6, 7).

19. Procédé selon la revendication 1, **caractérisé en ce que**, dans le système de stockage (175), se trouve un troisième entrepôt intermédiaire (174) et **en ce qu'**il comprend les étapes suivantes :
a) stockage et distribution des unités d'expédition par un système de distribution d'unités d'expédition vers le troisième entrepôt intermédiaire (174) ;
b) sortie d'au moins une unité d'expédition par le système de distribution d'unités d'expédition et préparation de l'unité d'expédition dans la zone de consolidation (18) en fonction d'une commande client saisie par l'ordinateur.
c) distribution et préparation des unités d'emballage (2) d'au moins une unité de livraison (133, 166) et préparation de l'unité de livraison (133, 166) dans la zone de consolidation (18) en fonction de la commande client ; et
d) regroupement des unités d'expédition et de livraison (133, 166) dans la zone de consolidation (18) dans un ordre de livraison déterminé pour le transport sur un véhicule de livraison (171) en fonction de la commande client, les étapes a) à d) se déroulant parallèlement.

20. Système de stockage (1 ; 175) permettant l'exécution du procédé selon l'une des revendications 1 à 19, comprenant un entrepôt d'entrée (4), dans lequel une pluralité d'unités d'emballage (2) différentes sont stockés sur des récipients de livraison (32) en tant qu'unités de réserve (5), les propriétés des unités d'emballage (2), choisies dans le groupe comprenant les dimensions, le poids, la densité, le facteur de basculement, la stabilité, l'étanchéité d'une fermeture d'une unité d'emballage (2) remplie de liquide, le type d'emballage, la capacité et/ou la forme de l'unité d'emballage (2), sont entrées dans une base de données et un ordinateur relié à cette base de données est prévu afin de pouvoir mesurer une caractéristique de transport déterminée à partir de la caractéristique de transport des unités d'emballage et avec lequel, à l'aide de la caractéristique de transport, un groupe de classification correspondant peut être déterminé pour chaque unité d'emballage (2), **caractérisé en ce que**, pour les unités d'emballage (2) attribuées à un premier groupe de classification, un dispositif de dépalettisation (6, 7) pour la dépalettisation des unités d'emballage (2) à partir des unités de réserve (5), un système de distribution d'unités d'emballage automatisé pour le convoyage des unités d'emballage (2), un premier entrepôt intermédiaire (9) automatisé pour les unités d'emballage (2) et une première station de chargement (14) avec un dispositif d'empilage automatisé (128) pour le chargement d'un récipient de livraison (15) sont prévus et, pour les unités d'emballage (2) attribuées à un deuxième groupe de classification, une station d'emballage (87) pour le reconditionnement manuel des unités d'emballage (2) dans au moins un support de chargement (69), un système de distribution de supports de chargement automatisé pour le convoyage des supports de chargement (69) vers un deuxième entrepôt intermédiaire (9), un deuxième entrepôt intermédiaire (9) pour les supports de chargement (69), une deuxième station de chargement (16) pour le chargement d'un récipient de livraison (17).

21. Système de stockage selon la revendication 20, **caractérisé en ce qu'**un système de distribution d'unités de réserve et un système de distribution d'unités d'emballage et au moins un dispositif de dépalettisation (6, 7) sont prévus pour le transfert des unités d'emballage (2) du deuxième groupe de classification et au moins une station d'emballage (87) est prévue pour le chargement d'au moins un support d'approvisionnement (74) constitué d'un support de chargement (69) ou d'un premier support d'expédition (73) et un deuxième entrepôt intermédiaire (9) est prévu pour le stockage temporaire des supports de chargement (69), le système de distribution d'unités de réserve reliant d'une part l'entrepôt d'entrée (4) et la station d'emballage (87) et d'autre part le système de distribution d'unités d'emballage, le dispositif de dépalettisation (6, 7) et la station d'emballage (87).

22. Système de stockage selon la revendication 21, **caractérisé en ce qu'**au moins un emplacement de préparation de commande (156) est prévu sur lequel les unités d'emballage (2) nécessaires à un ordre de préparation de commande sont prélevées dans au moins un support d'approvisionnement (74) et préparées dans au moins un deuxième support d'expédition (73).

23. Système de stockage selon la revendication 20, **caractérisé en ce que** le système de distribution d'unités d'emballage comprend une machine de tri circulaire (76).
